# EUROPÄISCHE PATENTSCHRIFT

(11) **EP 3 146 226 B1**
(45) Veröffentlichungstag und Bekanntmachung des Hinweises auf die Patenterteilung: **04.03.2020**
(21) Anmeldenummer: 15717903.7
(22) Anmeldetag: 23.04.2015
(51) Int. Cl.: F16D 23/12, F16H 61/28

(54) **VORRICHTUNG ZUR BETÄTIGUNG EINES KUPPLUNGSGESTEUERTEN VERTEILERGETRIEBES MIT EINEM ZWEISTUFIGEN ZWISCHENGETRIEBE UND HIERMIT AUSGESTATTETES KUPPLUNGSGESTEUERTES VERTEILERGETRIEBE MIT ZWEISTUFIGEM ZWISCHENGETRIEBE**
DEVICE FOR ACTUATING A CLUTCH-CONTROLLED TRANSFER CASE HAVING A TWO-STAGE INTERMEDIATE GEARING AND CLUTCH-CONTROLLED TRANSFER CASE THAT HAS A TWO-STAGE INTERMEDIATE GEARING AND THAT IS EQUIPPED WITH SAID DEVICE
DISPOSITIF POUR COMMANDER UNE BOÎTE DE TRANSFERT À ACCOUPLEMENT COMMANDÉ POURVUE D'UNE TRANSMISSION INTERMÉDIAIRE À DEUX ÉTAGES ET BOÎTE DE TRANSFERT À ACCOUPLEMENT COMMANDÉ POURVUE D'UNE TRANSMISSION INTERMÉDIAIRE À DEUX ÉTAGES QUI EST ÉQUIPÉE D'UN TEL DISPOSITIF

(30) Priorität: 21.05.2014 DE 102014209701
(43) Veröffentlichungstag der Anmeldung: 29.03.2017
(73) Patentinhaber: MAGNA Powertrain GmbH & Co KG, 8502 Lannach (AT)
(72) Erfinder: SCHLATZER, Helmut, 8573 Kainach (AT); STOCKER, Martin, 8401 Feldkirchen bei GRAZ (AT); TANGL, Ferdinand, 8075 Hart bei Graz (AT)
(74) Vertreter: Zangger, Bernd
(86) Internationale Anmeldenummer: PCT/EP2015/058848
(87) Internationale Veröffentlichungsnummer: WO 2015/176912

(56) Entgegenhaltungen:
- EP-A1- 1 875 109
- EP-B1- 1 875 109
- WO-A1-2008/115370
- DE-A1- 3 037 990
- DE-A1-102012 003 482
- DE-C1- 19 947 763

## Beschreibung

Die vorliegende Erfindung betrifft eine Vorrichtung gemäß dem Oberbegriff des unabhängigen Anspruchs 1 sowie ein kupplungsgesteuertes Verteilergetriebe mit einer solchen Vorrichtung.

Ein Verteilergetriebe wird oft bei Kraftfahrzeugen mit Allradantrieb eingesetzt, um ein vom Motor erzeugtes und an einer Antriebswelle des Verteilergetriebes zur Verfügung gestelltes Drehmoment auf zwei Abtriebswellen des Verteilergetriebes und damit auf mehr als eine angetriebene Achse zu verteilen. Jede der Abtriebswellen treibt hierbei eine Achse des Kraftfahrzeugs oder - falls das Kraftfahrzeug mehr als zwei angetriebene Achsen hat - ein Achsgetriebe mit Durchtrieb an.

Entlang des Kraftflusses vom Motor zur angetriebenen Achse ist das Verteilergetriebe üblicherweise nach dem das vom Motor erzeugte Drehmoment übersetzenden Fahrzeuggetriebe angebracht.

Beispielsweise für den Einsatz in Geländefahrzeugen und/oder in schweren Zugmaschinen kann zusätzlich zu einem vermittels eines Verteilergetriebes verwirklichten Mehr- und/oder Allradantrieb ein auch als Geländeuntersetzung bezeichnetes zweistufiges Zwischengetriebe mit einer ersten Stufe für den Straßenbetrieb und einer zweiten Stufe für den Gelände- und/oder schweren Zugbetrieb vorgesehen sein.

Ein solches zweistufiges Zwischengetriebe kann beispielsweise durch ein Planetenradgetriebe verwirklicht sein, bei dem beispielsweise vermittels mindestens einer Klauenkupplung ein oder mehrere Stufen relativ zueinander und/oder relativ zu einem ruhenden Gehäuse und/oder relativ zu einer Welle gesperrt werden können, wodurch sich das Übersetzungsverhältnis ändert.

Verteilergetriebe mit und ohne Zwischengetriebe werden abhängig von deren Bauart zu permanentem Allradantrieb oder zu beispielsweise automatisch oder durch den Fahrer eines Kraftfahrzeugs manuell zu- und abschaltbarem Allradantrieb nach so genannten differentialgesteuerten Verteilergetrieben und nach kupplungsgesteuerten Verteilergetrieben unterschieden.

Bei den differentialgesteuerten Verteilergetrieben teilt ein gegebenenfalls manuell oder automatisch sperrbares Differential- und/oder ein Planetengetriebe den Kraftfluss auf zwei permanent mit der Antriebswelle gekoppelte Abtriebswellen auf.

Bei den kupplungsgesteuerten Verteilergetrieben teilt eine automatisch und/oder manuell betätigte Kupplung, insbesondere eine Reibungskupplung, wie beispielsweise eine Lamellenkupplung, oder eine Viscokupplung mit oder eine starre Kupplung ohne Drehzahlausgleich, wie beispielsweise eine Klauenkupplung, den Kraftfluss auf zwei Abtriebswellen auf, von denen eine, die so genannte Primärwelle, permanent mit der Antriebswelle gekoppelt ist, und von denen die verbleibende, so genannte Sekundärwelle nur bei Bedarf mit der Antriebswelle gekoppelt und ansonsten von der Antriebswelle entkoppelt ist.

Darüber hinaus sind Verteilergetriebe zu zu- und abschaltbarem Allradantrieb bekannt, die zwar nicht permanent sind, aber dennoch über ein Differential- und/oder ein Planetengetriebe verfügen, das bei zugeschaltetem Allradantrieb die Verteilung der Antriebskraft übernimmt. Bei dieser Mischform ist der Allradantrieb differenzialgesteuert, kann jedoch mit einer oder mehreren Kupplungen auch weg- und zugeschaltet werden. Da diese Verteilergetriebe ebenfalls über eine eine Sekundärwelle zu- und wegschaltende Kupplung verfügen, werden sie ebenfalls zu den kupplungsgesteuerten Verteilergetrieben gezählt.

Der Vollständigkeit halber sei erwähnt, dass außerdem Verteilergetriebe bekannt sind, die ganz ohne Kupplung und ohne Differential- oder Planetengetriebe auskommen, beispielsweise wenn die Räder an den angetriebenen Achsen über Freilaufnaben verfügen.

Aufgrund ihrer einfachen und robusten Bauart überwiegen bei den kupplungsgesteuerten Verteilergetrieben solche mit Reibungskupplung.

Eine Reibungskupplung ist ein unter Last schaltbares Maschinenelement zur Drehmomentübertragung zwischen einer angetriebenen und einer anzutreibenden Welle.

Eine erste typische Ausgestaltung einer Reibungskupplung ist eine Einscheiben-Reibungskupplung, kurz Einscheibenkupplung. Diese umfasst eine auch als Kupplungsscheibe bezeichnete erste Reibscheibe, welche unverdrehbar mit einer der beiden Wellen, beispielsweise mit der angetriebenen Welle verbunden ist, sowie eine zweite Reibscheibe, die unverdrehbar mit der verbleibenden Welle, beispielsweise mit der anzutreibenden Welle verbunden ist. Die die Kupplungsscheibe bildende erste Reibscheibe ist gegen die zweite Reibscheibe entlang der gemeinsamen Längsachse der beiden Wellen verschiebbar angeordnet.

Werden die Reibscheiben der angetriebenen Welle und der anzutreibenden Welle axial zusammengepresst, so kommt es zum Kraftschluss und dadurch zur Drehmomentsübertragung und bei einer Rotation der angetriebenen Welle zu einer Übertragung mechanischer Leistung.

Eine zweite typische Ausgestaltung einer Reibungskupplung ist eine kurz als Lamellenkupplung bezeichnete Reiblamellenkupplung.

Ihr charakteristisches Merkmal im Vergleich mit anderen Reibungskupplungen, wie etwa der zuvor beschriebenen Einscheiben-Kupplung ist die Anordnung mehrerer, dort auch als Reibbeläge bezeichneter Reibscheiben in Reihe. Dabei ist eine erste Reibscheibe entlang der Reihe gesehen mit der angetriebenen Welle, eine zweite Reibscheibe mit der anzutreibenden Welle, eine dritte Reibscheibe wieder mit der angetriebenen Welle und so weiter immer im Wechsel unverdrehbar verbunden. Eine mit der angetriebenen Welle unverdrehbar verbundene Reibscheibe und eine mit der anzutreibenden Welle unverdrehbar verbundene Reibscheibe bilden ein Reibpaar. Werden die Reibscheiben der angetriebenen Welle und der anzutreibenden Welle mit einer vorgegebenen Anpresskraft axial zusammengepresst, wirkt die gleiche Anpresskraft auf alle Reibpaare. Durch die größere Kontaktfläche zwischen den mit der angetriebenen Welle unverdrehbar verbundenen Reibscheiben und den mit der anzutreibenden Welle unverdrehbar verbundenen Reibscheiben können bei der Lamellenkupplung im Vergleich beispielsweise zu einer Einscheibenkupplung bei gleicher Anpresskraft höhere Drehmomente übertragen werden.

In üblichen Allrad-Antriebssträngen werden Reibungskupplungen in Form von Lamellenkupplungen zur Drehmomentübertragung verwendet. Diese Kupplungen müssen mit einer Kraft von mehreren kN zusammengepresst werden, um die erforderlichen Drehmomente übertragen zu können.

Meist werden Reibungskupplungen, wie etwa Lamellenkupplungen, elektrohydraulisch, beispielsweise vermittels einer elektromotorisch angetriebenen Hydraulikpumpe und einem Hydraulikkolben, oder elektro-mechanisch, beispielsweise vermittels eines Elektromotors via eines Stirnradgetriebes und/oder eines Schneckentriebs und/oder eines Kugelrampenmechanismus und/oder eines Kniehebelmechanismus und/oder einer Kombination hiervon betätigt.

Anhand der voranstehenden, nicht abschließenden Auflistung ist ersichtlich, dass eine Vielzahl verschiedener Ausgestaltungsmöglichkeiten gibt, wie eine Reibungskupplung betätigt werden kann.

Aufgrund des meist sehr begrenzten Bauraums in kupplungsgesteuerten Verteilergetrieben mit zweistufigem Zwischengetriebe scheiden einige der erwähnten Betätigungsmechanismen von vornherein aus. Darüber hinaus scheidet aufgrund des meist sehr begrenzten Bauraums und des hohen Kostendrucks ein Einbau zweier Betätigungsmechanismen, von denen einer die Kupplung betätigt und der andere das Zwischengetriebe schaltet, grundsätzlich aus.

Zur Betätigung eines kupplungsgesteuerten Verteilergetriebes mit zweistufigem Zwischengetriebe ist daher bekannt, eine Vorrichtung vorzusehen, welche sowohl die Kupplung betätigt, als auch das Zwischengetriebe schaltet.

Eine gebräuchliche Lösung einer Vorrichtung zur Betätigung der Kupplung und zur Schaltung des Zwischengetriebes umfasst einen relativ kleinen 12-V Elektromotor in einer Leistungsklasse von wenigen 100 W und einem Drehmoment kleiner als 1 Nm.

Unter diesen Randbedingungen ist eine entsprechend hohe mechanische Übersetzung zwischen Elektromotor und Kupplung erforderlich.

Diese Übersetzung muss kostengünstig sein, einen guten Wirkungsgrad aufweisen und in einem meist sehr begrenzten Bauraum Platz finden.

Eine übliche Ausführung von Verteilergetrieben mit zweistufigem Zwischengetriebe ist, vermittels einer Vorrichtung mit einer elektromotorisch angetriebenen Schaltwelle mit zwei Kurvenscheiben sowohl die Kupplung zu betätigen, als auch das zweistufige Zwischengetriebe zu schalten.

Dabei wird in einem ersten Drehwinkelbereich der Schaltwelle die Kupplung in der ersten Schaltstufe des Zwischengetriebes betätigt, in einem zweiten Drehwinkelbereich der Schaltwelle zwischen der ersten und der zweiten Schaltstufe des Zwischengetriebes hin und her geschaltet, und in einem dritten Drehwinkelbereich der Schaltwelle die Kupplung in der zweiten Schaltstufe des Zwischengetriebes betätigt.

Der gesamte dafür verfügbare Winkelbereich ist mit 360° auf eine ganze Umdrehung der Schaltwelle begrenzt. Damit ist auch das Übersetzungsverhältnis zur Betätigung der Kupplung beschränkt.

Durch DE 11 2006 002 138 T5 ist ein kupplungsgesteuertes Verteilergetriebe mit einem zweistufigen Zwischengetriebe und einer als Lamellenkupplung ausgeführten Kupplung bekannt. Zur Betätigung der Kupplung und zum Schalten des Zwischengetriebes umfasst das Verteilergetriebe eine Vorrichtung mit einer Schaltwelle und einem diese in Drehbewegung versetzenden Elektromotor sowie zwei Kurvenscheiben, einer Kupplungskurvenscheibe und einer Schaltkurvenscheibe. Die Schaltkurvenscheibe ist auf der Schaltwelle angeordnet. Eine Rotation der Schaltkurvenscheibe ausgehend von einer Neutralstellung um jeweils höchstens eine halbe Umdrehung in beiden Drehrichtungen führt zu einer axialen Bewegung, welche abhängig von der Drehrichtung der Schaltwelle eine Schaltung des Zwischengetriebes von der ersten in die zweite Stufe und umgekehrt bewirkt. Die Kupplungskurvenscheibe ist mit einem parallel zur Längsachse der Schaltwelle wirkenden, axial auf die Lamellenkupplung einwirkenden Kugelrampenmechanismus verbunden. Der Kugelrampenmechanismus presst bei einer Drehung der Kupplungskurvenscheibe ausgehend von einer Neutralstellung sowohl in einer ersten, als auch in einer entgegengesetzten zweiten Drehrichtung die Lamellenkupplung zusammen. Die Kupplungskurvenscheibe wird vermittels der Schaltwelle rotatorisch angetrieben. Hierzu ist auf der Schaltwelle eine Nockenscheibe mit zwei um einen Neutraldrehwinkel voneinander beabstandeten Mitnehmern angeordnet, welche bei einer Drehung der Schaltwelle sowohl in einer ersten Drehrichtung, als auch in einer entgegengesetzten, zweiten Drehrichtung ausgehend von einer Neutralstellung in Eingriff mit der Kupplungskurvenscheibe kommt. Der Neutraldrehwinkel ist hierbei derart bemessen, dass ausgehend von einer Neutralstellung der Schaltwelle abhängig von der Drehrichtung einer der beiden Mitnehmer erst bei Überschreitung des halben Neutraldrehwinkels die Kupplungskurvenscheibe mitnimmt und dadurch in entgegengesetzter Richtung zur Schaltwelle verdreht. Hierdurch kann innerhalb des durch den Neutraldrehwinkel gegebenen Drehwinkelbereichs vermittels der Schaltkurvenscheibe zwischen den Schaltstufen des Zwischengetriebes hin und her geschaltet werden, woraufhin erst ab der Mitnahme der Kupplungskurvenscheibe durch einen der beiden Mitnehmer die Lamellenkupplung zusammengepresst wird. Die Kupplungskurvenscheibe erfährt bei einem wie bei der Beschreibung der Schaltkurvenscheibe bereits ausgeführt insgesamt auf eine volle Umdrehung begrenzten Drehwinkelbereich der Schaltwelle ausgehend von ihrer Neutralstellung hierbei nur eine Drehung um etwa 45° in jeder Richtung. Sie erfährt dadurch einen maximalen Drehwinkelbereich von einer viertel Umdrehung im Vergleich zu einer vollen Umdrehung der Schaltwelle. Hierdurch drängt sich das gesamte Übersetzungsverhältnis des Kugelrampenmechanismus sowohl in der einen, als auch in der anderen Drehrichtung nachteilig auf eine Viertelumdrehung. Alternativ kann der Kugelrampenmechanismus mit der Schaltwelle über einen Zahnradsatz direkt gekoppelt sein. Hierbei entfallen die Kupplungskurvenscheibe und die Nockenscheibe. Zur selben Funktionsweise bedarf der Kugelrampenmechanismus allerdings eines Neutralbereichs, innerhalb dem der Schaltvorgang stattfinden kann.

Durch EP 1 977 128 B1 ist bekannt, bei einem kupplungsgesteuerten Verteilergetriebe mit einem zweistufigen Zwischengetriebe und einer als Lamellenkupplung ausgeführten Kupplung die Kupplungskurvenscheibe einer Vorrichtung zur Betätigung der Kupplung und zum Schalten des Zwischengetriebes mit einer Schaltwelle und einem diese in Drehbewegung versetzenden Elektromotor sowie zwei Kurvenscheiben, einer Schaltkurvenscheibe und einer Kupplungskurvenscheibe, mit zwei sich jeweils einmal spiralförmig um die Kupplungskurvenscheibenachse windenden Spiralkanälen auszuführen, in und entlang welchen jeweils eine zweier der Kupplungskurvenscheibenachse diametral gegenüberliegend angeordneter Rollen abwälzen. Jeder Spiralkanal weist in dessen Mitte eine zentrale Depression auf, ausgehend von welcher sich zu den gegenüberliegenden Enden jeden Spiralkanals in beiden Drehrichtungen gesehen je eine in axialer Richtung ansteigende Rampe erstreckt. Von einem auf der Kupplungskurvenscheibenachse liegenden Mittelpunkt der Kupplungskurvenscheibe aus gesehen, sind die beiden Depressionen der zwei Spiralkanäle diametral gegenüberliegend angeordnet. Die Rollen sind um radial verlaufende Achsen drehbar und radial verschiebbar gelagert in einem via eines Stirnrads vermittels der Schaltwelle drehbaren, mit dem Stirnrad kämmenden Zahnrad angeordnet. Die Kupplungsscheibe selbst ist zwischen zwei einen Neutralbereich festlegenden Anschlägen um etwa 180° verdrehbar angeordnet. In der Neutralstellung der Schaltwelle befindet sich die Kupplungsscheibe in einer Drehwinkelstellung zwischen den beiden Anschlägen. Die Schaltkurvenscheibe ist unverdrehbar mit der Schaltwelle verbunden. Die Schaltkurvenscheibe weist eine axiale Kulissenführung auf. Die Kulissenführung weist um die Neutralstellung herum eine in axialer Richtung entlang der Schaltwelle ansteigende Rampe auf, welche an ihren beiden Enden jeweils in einen in einer normal zur Achse der Schaltwelle verlaufende Ebene um die Schaltwelle umlaufenden Schlitz übergeht. In die Kulissenführung greift ein vermittels der Kulissenführung in beiden axialen Richtungen entlang der Schaltwelle geführter Schaltstift ein. Eine Bewegung des Schaltstifts parallel zur Achse der Schaltwelle bewirkt einen Wechsel der Schaltstufen des Zwischengetriebes. Dreht sich die Schaltwelle ausgehend von der Neutralstellung in eine Drehrichtung, so treibt diese via des Stirnrads das Zahnrad mit den beiden Rollen. Bei einer Drehung der Schaltwelle ausgehend von der Neutralstellung in eine Drehrichtung verdrehen die beiden sich in der Neutralstellung in den ihnen zugeordneten Depressionen zwischen den entgegengesetzt ansteigenden Rampen des Spiralkanals befindenden Rollen des mit der Schaltwelle gekoppelten Zahnrads die Kupplungskurvenscheibe abhängig von der Drehrichtung aus der Neutralstellung gegen einen der beiden Anschläge. Um die Kupplungskurvenscheibe von Anschlag zu Anschlag zu verdrehen, dreht sich die Schaltwelle hierbei um einen als Neutralbereich bezeichneten Drehwinkelbereich, innerhalb dem zwischen der ersten und der zweiten Schaltstufe des Zwischengetriebes hin und her geschaltet werden kann, ohne die Kupplung zu betätigen. Das Hin- und Herschalten zwischen der ersten und der zweiten Schaltstufe des Zwischengetriebes erfolgt, indem die Schaltwelle während des Verdrehens der Kupplungskurvenscheibe aus der Neutralstellung gegen einen der Anschläge gleichzeitig die Schaltkurvenscheibe dreht, in deren Kulissenführung der Schaltstift zunächst der Rampe folgt und dadurch eine axiale Verschiebung erfährt. Durch entgegengesetztes Drehen der Schaltwelle wird hierdurch zwischen den Schaltstufen des Zwischengetriebes gewechselt. Dreht die Schaltwelle in einer einmal gewählten Drehrichtung weiter, so geht am Ende des Neutralbereichs die Rampe der Kulissenführung der Schaltkurvenscheibe in den Schlitz über, so dass der Schaltstift keine weitere axiale Verschiebung mehr erfährt und die gewählte Schaltstufe des Zwischengetriebes gehalten wird. Die beiden Rollen des sich bei weiter drehender Schaltwelle ebenfalls weiter drehenden Zahnrads folgen demgegenüber den ausgehend von den beiden zentralen Depressionen in axialer Richtung ansteigenden Rampen in den zwei jeweils einer der beiden Rollen zugeordneten Spiralkanälen der nunmehr gegen einen Anschlag fest stehenden Kupplungskurvenscheibe. Die Rollen sind Teil eines Kugelrampenmechanismus, welcher die Lamellenkupplung immer stärker gegeneinander presst, je weiter die Rollen den Rampen in den ihnen zugeordneten Spiralkanälen hinauf folgen. Durch die radiale Verschiebbarkeit der Rollen wird eine Drehung des Zahnrads gegenüber der gegen einen Anschlag fest stehenden Kupplungskurvenscheibe um eine volle Umdrehung ermöglicht. Hierdurch kann das zum Zusammenpressen der Lamellenkupplung notwendige Übersetzungsverhältnis vorteilhaft auf eine ganze Umdrehung in jeder Richtung verteilt werden. Darüber hinaus kann der Neutralbereich, innerhalb dem ein Wechsel zwischen den Schaltstufen des Zwischengetriebes stattfindet, durch entsprechende Position der Anschläge festgelegt werden. Dadurch kann auch die Übersetzung zum Wechsel der Schaltstufen auf den durch die Anschläge gegebenen Neutralbereich verteilt werden.

Durch EP 1 875 109 B1 ist bekannt, bei einem kupplungsgesteuerten Verteilergetriebe mit einer beispielsweise als Lamellenkupplung ausgeführten Reibungskupplung ein hohes Übersetzungsverhältnis für die Betätigung der Reibungskupplung zu erhalten, indem diese vermittels zweier Rampenringe gegeneinander gepresst wird. Wesentlich ist, dass ein Verdrehen der beiden Rampenringe im Gegensinn diese in axialer Richtung auseinandertreibt. An den Rampenringen ist jeweils ein Scherenhebel angebracht beziehungsweise mit diesem einstückig. Die mit Rollen versehenen Enden der Scherenhebel reiten auf dem Umfang einer Kupplungskurvenscheibe. Der Umfang der Kupplungskurvenscheibe ist in zwei zum Mittelpunkt der Kupplungskurvenscheibe punktsymmetrische Kurvenbahnen zweigeteilt, je einer Kurvenbahn je Scherenhebel. Die Kurvenbahnen sind so ausgebildet, dass mit zunehmender Drehung der Kupplungskurvenscheibe ausgehend von einer Ausgangsstellung die Scherenhebel gegensinnig verschwenken. Hierdurch kann das zum Zusammenpressen der Lamellenkupplung notwendige Übersetzungsverhältnis auf eine halbe Umdrehung der Kupplungskurvenscheibe in einer Drehrichtung verteilt werden.

Den durch den Stand der Technik bekannten kupplungsgesteuerten Verteilergetrieben mit zweistufigem Zwischengetriebe gemein ist ein beschränktes Übersetzungsverhältnis zum Zusammenpressen deren Reibungskupplungen.

Aufgabe der Erfindung ist, eine Vorrichtung zur Betätigung eines kupplungsgesteuerten Verteilergetriebes mit zweistufigem Zwischengetriebe zu entwickeln, welche ein höheres Übersetzungsverhältnis aufweist, sowie ein mit einer solchen Vorrichtung ausgestattetes, kupplungsgesteuertes Verteilergetriebe mit zweistufigem Zwischengetriebe.

Die Aufgabe wird jeweils gelöst durch die Merkmale der Ansprüche 1 und 14.

Vorteilhafte Weiterbildungen der vorliegenden Erfindung ergeben sich aus den abhängigen Ansprüchen.

Ein erster Gegenstand der Erfindung betrifft demnach eine Vorrichtung zur Betätigung eines kupplungsgesteuerten Verteilergetriebes mit zweistufigem Zwischengetriebe. Die Vorrichtung umfasst:
- eine bevorzugt in entgegengesetzten Drehrichtungen drehbar angetriebene Schaltwelle,
- einen Antrieb, vorzugsweise einen Elektromotor, wobei allerdings auch andere Antriebe, wie beispielsweise hydraulische oder pneumatische, um nur einige denkbare Ausgestaltungen zu nennen, oder Kombinationen hiervon denkbar sind, zum Drehen der Schaltwelle,
- eine Kupplungskurvenscheibe sowie vorzugsweise eine Schaltkurvenscheibe, die beide vermittels der Schaltwelle um jeweils eine eigene oder um eine gemeinsame, beispielsweise mit der Achse der Schaltwelle identische Achse, oder von denen eine um die Achse der Schaltwelle und die andere um eine eigene Achse verdrehbar sind, sowie
- einen oder zwei mit einem Betätigungsmechanismus zur Betätigung einer bei Bedarf einen regelbaren Kraftfluss zwischen der Antriebswelle des Verteilergetriebes und der Sekundärwelle des Verteilergetriebes herstellenden Reibungskupplung gekoppelte Scherenhebel.

Mittels der Vorrichtung wird in einem ersten Drehwinkelbereich die Kupplung in der ersten Schaltstufe des Zwischengetriebes betätigt, in einem zweiten Drehwinkelbereich zwischen der ersten und der zweiten Schaltstufe des Zwischengetriebes hin und her geschaltet, und in einem dritten Drehwinkelbereich die Kupplung in der zweiten Schaltstufe des Zwischengetriebes betätigt.

Ein bevorzugt mit mindestens einer Rolle versehenes Ende wenigstens eines Scherenhebels wird in einer an der Kupplungskurvenscheibe vorgesehenen Kulisse geführt.

Je zu führendem Ende eines Scherenhebels kann die Kulisse eine Kurvenbahn aufweisen.

Beispielsweise kann eine einem ersten Scherenhebel zugeordnete erste Kurvenbahn auf einer ersten Stirnseite der Kupplungskurvenscheibe und eine einem zweiten Scherenhebel zugeordnete zweite Kurvenbahn auf einer der ersten Stirnseite der Kupplungskurvenscheibe gegenüberliegenden zweiten Stirnseite der Kupplungskurvenscheibe vorgesehen sein. Die Kupplungskurvenscheibenachse verläuft hierbei normal zu den beiden Stirnseiten.

Alternativ eine einem ersten Scherenhebel zugeordnete erste Kurvenbahn und eine einem zweiten Scherenhebel zugeordnete zweite Kurvenbahn auf der selben Stirnseite der Kupplungskurvenscheibe vorgesehen sein, wobei die Kurvenbahnen ineinander liegend spiralförmig um die normal auf der Stirnseite der Kupplungskurvenscheibe aufstehende Kupplungskurvenscheibenachse umlaufend ausgebildet sind.

Die Kurvenbahn kann so ausgebildet sein, dass mit zunehmendem Drehwinkel sowohl in der einen, als auch in der entgegengesetzten Drehrichtung bei einer Drehung der Kupplungskurvenscheibe ausgehend von einer Neutralstellung der mit seinem Ende in der Kurvenbahn geführte Scherenhebel ausgehend von einer Anfangsstellung in der einen Drehrichtung eine zunehmende Auslenkung weg von der Kupplungskurvenscheibenachse und in der anderen, entgegengesetzten Drehrichtung eine zunehmende Auslenkung zur Kupplungskurvenscheibenachse hin erfährt.

Hierdurch werden ausgehend von der Neutralstellung ein erster Drehwinkelbereich in der einen Drehrichtung gebildet, in dem die Kupplung in der ersten Schaltstufe des Zwischengetriebes betätigt wird, und in der anderen Drehrichtung ein dritter Drehwinkelbereich gebildet, in dem die Kupplung in der zweiten Schaltstufe des Zwischengetriebes betätigt wird. Diese Konfiguration ist sowohl mit einem, als auch mit zwei Scherenhebeln verwendbar.

Alternativ kann bei zwei Scherenhebeln die Kurvenbahn des einen Scherenhebels so ausgebildet sein, dass bei einer Drehung der Kupplungskurvenscheibe ausgehend von einer Neutralstellung der mit seinem Ende in der Kurvenbahn geführte und in der Neutralstellung eine Anfangsstellung einnehmende Scherenhebel mit zunehmendem Drehwinkel in der einen Drehrichtung eine zunehmende Auslenkung weg von der Kupplungskurvenscheibenachse oder eine zunehmende Auslenkung hin zur Kupplungskurvenscheibenachse erfährt, und in der anderen, entgegengesetzten Drehrichtung in konstantem Abstand zur Kupplungskurvenscheibenachse geführt wird, wohingegen die Kurvenbahn des anderen Scherenhebels so ausgebildet ist, dass bei einer Drehung der Kupplungskurvenscheibe ausgehend von einer Neutralstellung der mit seinem Ende in der Kurvenbahn geführte und in der Neutralstellung eine Anfangsstellung einnehmende andere Scherenhebel mit zunehmendem Drehwinkel in der einen Drehrichtung einen konstante Abstand zur Kupplungskurvenscheibenachse beibehält und in der anderen, entgegengesetzten Drehrichtung eine zunehmende Auslenkung weg von der Kupplungskurvenscheibenachse oder eine zunehmende Auslenkung zur Kupplungskurvenscheibenachse hin erfährt.

Hierdurch wird in jeder Drehrichtung nur einer der beiden Scherenhebel ausgelenkt, wohingegen der verbleibende Scherenhebel seine Anfangsstellung beibehält und wobei ausgehend von der Neutralstellung in der einen Drehrichtung der eine Scherenhebel, und in der entgegengesetzten Drehrichtung der andere Scherenhebel eine Auslenkung erfährt.

Sind zwei mit ihren Enden jeweils in einer Kurvenbahn der Kulisse geführte Scherenhebel vorgesehen, so sind die beiden jeweils einem Ende eines Scherenhebels zugeordneten Kurvenbahnen so ausgeführt, dass in beiden Drehrichtungen die Scherenhebel gegensinnig verschwenken.

Beispielsweise kann dies verwirklicht sein, indem die beiden Scherenhebel mit ihren Enden diametral zur Kupplungskurvenscheibenachse gegenüberliegend in identisch ausgeführte, jedoch um 180° um die Kupplungskurvenscheibenachse verdreht zueinander angeordnete, sich um die Kupplungskurvenscheibenachse windende Kurvenbahnen eingreifen und/oder mit ihren Enden in entsprechenden Kurvenbahnen geführt werden.

In jeder Drehrichtung windet sich eine Kurvenbahn ausgehend von einer beispielsweise in etwa in der Mitte der Kurvenbahn liegenden Neutralstellung um mindestens 180° um die Kupplungskurvenscheibenachse, so dass mehr als eine ganze Umdrehung der Kupplungskurvenscheibe erforderlich ist, damit ein in einer Kurvenbahn geführtes Ende eines Scherenhebels von einem Ende einer Kurvenbahn beispielsweise via der Neutralstellung zum gegenüberliegenden Ende der Kurvenbahn gelangt.

Hierdurch kann ein Verdrehwinkel von über 360° einhergehend mit einem um zumindest etwa 25% im Vergleich zu einem eingeschränkten Verdrehwinkel von weniger als 360° erhöhten Übersetzungsverhältnis erreicht werden.

Grundsätzlich ist eine Ausführung mit nur einem mit seinem beispielsweise mit einer Rolle versehenen Ende in einer Kulisse der Kupplungskurvenscheibe geführten Scherenhebel denkbar, oder eine Ausführung mit einem mit seinem beispielsweise mit einer Rolle versehenen Ende in einer Kulisse der Kupplungskurvenscheibe geführten ersten Scherenhebel und einem zweiten, sich beispielsweise an einem Gehäuse oder an der Schaltwelle abstützenden zweiten Scherenhebel.

Alternativ ist eine Ausführung mit zwei mit ihren Enden jeweils in einer Kurvenbahn der Kulisse geführten Scherenhebeln denkbar.

Der mit dem oder den Scherenhebeln gekoppelte Betätigungsmechanismus kann zwei gegeneinander verdrehbare Rampenringe umfassen, welche entweder beide gegeneinander verdrehbar sind, oder von denen einer fest stehend ausgeführt und der andere gegen den fest stehenden verdrehbar ist, wobei wenigstens ein Rampenring mit einem Scherenhebel verbunden oder mit diesem einstückig ist. Wesentlich ist, dass ein Verdrehen der beiden Rampenringe im Gegensinn diese in axialer Richtung auseinandertreibt.

Ist nur ein mit seinem beispielsweise mit einer Rolle versehenen Ende in der Kulisse der Kupplungskurvenscheibe geführter Scherenhebel vorgesehen, so bewirkt dessen Verdrehen gegenüber dem verbleibenden, unverdrehbaren, beispielsweise vermittels eines zweiten Scherenhebels gegen ein Verdrehen an der Schaltwelle abgestützten Rampenring ebenfalls, dass die beiden Rampenringe in axialer Richtung auseinandergetrieben werden.

Um ausgehend von einer Neutralstellung ein Auseinandertreiben der beiden Rampenringe sowohl in der einen, als auch in der anderen, entgegengesetzten Drehrichtung zu erhalten, können beide Rampenringe auf jeweils einer deren Stirnseiten mit mindestens einer umlaufenden, V-förmig ausgebildeten Rampe versehen sein, welche in ihrer Mitte eine Depression aufweist und deren Enden an einer erhabenen Stelle entweder in mathematischem Sinne stetig, also ohne einen dazwischenliegenden Sprung, aneinanderstoßen, oder mit einem Ende einer benachbarten, identischen Rampe an einer erhabenen Stelle stetig aneinanderstoßen, wobei sich bei beispielsweise zwei V-förmigen Rampen beginnend und endend an der selben erhabenen Stelle eine W-förmige Struktur um den Umfang der Rampenringe gesehen ergibt. Die beiden Rampenringe sind mit ihren mit Rampen versehenen Stirnseiten einander zugewandt, wobei in der Neutralstellung eine erhabene Stelle des einen Rampenrings in einer Depression des anderen Rampenrings zu liegen kommt.

Die Rampenringe können als Kugelrampenringe ausgeführt sein beziehungsweise gemeinsam einen Kugelrampenmechanismus bilden.

Die Kupplungskurvenscheibe ist gegenüber der Schaltwelle zwischen zwei Anschlägen um einen einen Neutralbereich bildenden zweiten Drehwinkelbereich verdrehbar angeordnet, innerhalb dem zwischen der ersten und der zweiten Schaltstufe des Zwischengetriebes hin und her geschaltet werden kann.

Hierzu steht die Schaltkurvenscheibe mit dem Zwischengetriebe in derartiger Wirkverbindung, dass ausgehend von der Neutralstellung bei einer Drehung der Schaltwelle in entgegengesetzten Drehrichtungen innerhalb des Neutralbereichs zwischen den Schaltstufen des Zwischengetriebes gewechselt wird, wobei ab einem Verlassen des Neutralbereichs die durch eine Drehrichtung ausgehend von der Neutralstellung einmal gewählte Schaltstufe des Zwischengetriebes gehalten wird und durch eine dann erfolgende Mitnahme der Kupplungskurvenscheibe bei einer weiteren Drehung der Schaltwelle am Ende bzw. außerhalb des Neutralbereichs durch eine Auslenkung des mindestens einen Scherenhebels die einen regelbaren Kraftfluss zwischen der Antriebswelle des Verteilergetriebes und der Sekundärwelle des Verteilergetriebes herstellende Reibungskupplung mit zunehmendem Drehwinkel stärker zusammen gepresst wird.

Während innerhalb des den Neutralbereich bildenden zweiten Drehwinkelbereichs zwischen der ersten und der zweiten Schaltstufe des Zwischengetriebes hin und her geschaltet wird, steht die Kupplungskurvenscheibe durch den mindestens einen mit seinem Ende in der Kulisse geführten Scherenhebel in einer Neutralposition gehalten still.

Erst wenn die Schaltwelle über den Neutralbereich hinaus gedreht wird, beginnt sich die Kupplungskurvenscheibe über einen Anschlag mit zu verdrehen. Damit stehen in beiden Drehrichtungen jeweils ein Drehwinkelbereich von mindestens etwa 180° nur für die Betätigung der Reibungskupplung zur Verfügung.

Die mindestens eine Kurvenbahn der an der Kupplungskurvenscheibe vorgesehenen Kulisse kann eine degressive Ausgestaltung hinsichtlich der durch sie mit zunehmendem Drehwinkel sowohl in der einen, als auch in der anderen, entgegengesetzten Drehrichtung bewirkten zunehmenden Auslenkung des mindestens einen mit seinem Ende in ihr geführten Scherenhebels aufweisen. Beispielsweise kann die degressive Ausgestaltung derart ausgebildet sein, dass die Kurvenbahn unterschiedliche Steigungen weg bzw. hin zur Kupplungskurvenscheibenachse im Bereich des Lüftwegs der Reibungskupplung und im Bereich der Kupplungsaktuierung, in dem am Ende des Lüftwegs die Reibungskupplung zusammengepresst wird, aufweist. Vorzugsweise ist ausgehend von der Neutralstellung im Bereich des Lüftwegs zunächst eine hohe Steigung vorgesehen, wohingegen im Anschluss hieran im Bereich der Kupplungsaktuierung eine flache Steigung vorgesehen ist.

Hierdurch kann das Übersetzungsverhältnis im Bereich der Kupplungsaktuierung um etwa 20% im Vergleich zu einer linearen Ausgestaltung erhöht werden.

Der Kupplungsweg, um den die Reibungskupplung zu deren Betätigung zusammen gepresst werden muss, teilt sich im Wesentlichen in drei Bereiche auf: Lüftweg, Toleranzen und Verschleiß, sowie Betätigungsweg. Im Lüftweg sind die notwendigen Kräfte sehr gering. Dieser Bereich kann daher mit einer hohen Steigung einhergehend mit einem geringen Übersetzungsverhältnis der mindestens einen Kurvenbahn der Kulisse durchfahren werden. Durch die hohe Steigung wird für einen vorgegebenen Lüftweg der Reibungskupplung nur ein geringer Drehwinkel der Schaltwelle benötigt, wodurch ein größerer zum Zusammenpressen der Reibungskupplung zur Verfügung stehender Teil des ersten und des dritten Drehwinkelbereichs, innerhalb denen die Reibungskupplung betätigt wird, verbleibt. In diesem verbleibenden Teil weist die mindestens eine Kurvenbahn der Kulisse eine geringe Steigung in der einen Drehrichtung hin zur Kupplungskurvenscheibenachse und in der anderen, entgegengesetzten Drehrichtung weg von der Kupplungskurvenscheibenachse auf, entsprechend einem hohen Übersetzungsverhältnis.

Die eine bei konstanter Drehwinkeländerung unterschiedlich starke Auslenkungsänderungen des Scherenhebels bewirkende degressive Ausgestaltung der mindestens einen Kurvenbahn der Kulisse kann entweder auf Basis einer in mathematischem Sinne stetigen mathematischen Funktion, oder mit zwei oder mehr unterschiedlichen, jedoch für sich jeweils konstanten Steigungen ausgeführt sein.

Die Kupplungskurvenscheibe ist bevorzugt auf der Schaltwelle um den einen Neutralbereich bildenden zweiten Drehwinkelbereich verdrehbar angeordnet.

Wichtig ist hervorzuheben, dass bei gängigen Vorrichtungen zur Betätigung eines kupplungsgesteuerten Verteilergetriebes mit zweistufigem Zwischengetriebe durch die auch als Steuernocke bezeichnete Kupplungskurvenscheibe zwei Scherenhebel gegeneinander verdreht werden, welche dann beispielsweise über schraubenförmige Kugelrampenmechanismen eine Axialkraft auf die Kupplung ausüben. Einer der beiden Scherenhebel kann sich dabei mit seinem Ende beispielsweise auf dem Umfang der Steuernocke bewegen, wohingegen sich der andere Scherenhebel auf der Schaltwelle oder an einem Gehäuse eines kupplungsgesteuerten Verteilergetriebes mit zweistufigem Zwischengetriebe, welches unter anderem beispielsweise zumindest einen Teil der Vorrichtung zur Betätigung des kupplungsgesteuerten Verteilergetriebes mit zweistufigem Zwischengetriebe beherbergen kann, abstützt. Demgegenüber ist bei der erfindungsgemäßen Vorrichtung vorgesehen, zumindest für das beispielsweise mit wenigstens einer Rolle versehene Ende eines Scherenhebels, vorzugsweise für die beispielsweise mit jeweils wenigstens einer Rolle versehenen Enden beider Scherenhebel, eine an der Kupplungskurvenscheibe vorgesehene Kulisse zur Führung eines Endes wenigstens eines Scherenhebels mit je einer eigenen spiralförmigen Kurvenbahn je zu führendem Ende eines Scherenhebels vorzusehen. Hierdurch wird bei der erfindungsgemäßen Vorrichtung ein Drehwinkelbereich der Kupplungskurvenscheibe erhalten der 360° überschreiten kann, wodurch im Vergleich zu einer Drehung um weniger als 360° eine geringere Steigung der einen oder der beiden Kurvenbahnen in radialer Richtung zur Kupplungskurvenscheibenachse gesehen in Bezug auf ein vorgegebenes Inkrement des Drehwinkel gewählt und hierdurch ein höheres Übersetzungsverhältnis verwirklicht werden kann.

Vorteile gegenüber dem Stand der Technik ergeben sich neben einer vollständigen Lösung der gestellten Aufgabe unter Behebung sämtlicher Nachteile des Standes der Technik unter Anderem durch eine Erhöhung der mechanischen Übersetzung beziehungsweise durch eine Erhöhung des Übersetzungsverhältnisses zwischen dem Antrieb der Vorrichtung zur Betätigung eines kupplungsgesteuerten Verteilergetriebes mit zweistufigem Zwischengetriebe und dem eine Axialkraft auf die Reibungskupplung ausübenden Betätigungsmechanismus eines mit einer solchen Vorrichtung ausgestatteten Verteilergetriebes.

Zusätzliche Vorteile ergeben sich durch eine Verbesserung des insgesamten Wirkungsgrads innerhalb einer sich vom Antrieb bis zum Betätigungsmechanismus erstreckenden Aktuatorikkette.

Ein damit einhergehender Vorteil sind Kosteneinsparungen durch eine verringerte Leistungsanforderung an den Antrieb der Vorrichtung.

Ein zweiter Gegenstand der Erfindung betrifft ein kupplungsgesteuertes Verteilergetriebe mit zweistufigem Zwischengetriebe. Das Verteilergetriebe umfasst:
- eine Antriebswelle,
- eine mit der Antriebswelle permanent gekoppelte, beispielsweise mit dieser fest verbundenen oder einstückigen Primärwelle,
- eine gegebenenfalls unter einem Achsversatz zur Antriebswelle angeordnete Sekundärwelle,
- gegebenenfalls ein zwischen Sekundärwelle und Antriebswelle angeordnetes, deren gegebenenfalls vorhandenen Achsversatz überbrückendes Versatzgetriebe,
- eine zwischen Antriebswelle und Sekundärwelle angeordnete, diese bei Bedarf zu deren Betrieb mit der Antriebswelle koppelnde und bei Bedarf zu deren Stilllegung von der Antriebswelle entkoppelnde Reibungskupplung mit mindestens einem Reibpaar bestehend aus einer mit einer angetriebenen Welle unverdrehbar verbundenen ersten Reibscheibe und einer mit einer anzutreibenden Welle unverdrehbar verbundenen zweiten Reibscheibe,
- einen Betätigungsmechanismus, der bei dessen Betätigung eine ein Zusammenpressen der Reibungskupplung bewirkende Axialkraft auf das eine oder die mehreren Reibpaare der Reibungskupplung ausübt,
- ein zweistufiges Zwischengetriebe mit einer ersten und einer zweiten Schaltstufe sowie
- eine zuvor beschriebenen Vorrichtung zur Betätigung eines kupplungsgesteuerten Verteilergetriebes mit zweistufigem Zwischengetriebe, welche einerseits die Reibungskupplung betätigt und andererseits die Schaltstufen des Zwischengetriebes wechselt.

Der Betätigungsmechanismus wird vermittels des mindestens einen mit seinem Ende in der Kulisse der Kupplungskurvenscheibe geführten Scherenhebels betätigt.

Das kupplungsgesteuerte Verteilergetriebe mit zweistufigem Zwischengetriebe erlaubt sämtliche Vorteile der beschriebenen Vorrichtung zur Betätigung eines kupplungsgesteuerten Verteilergetriebes mit zweistufigem Zwischengetriebe in Verbindung mit einem solchen Verteilergetriebe nutzbar zu machen.

Sowohl die Vorrichtung, als auch das Verteilergetriebe können alternativ oder zusätzlich einzelne oder eine Kombination mehrerer einleitend in Verbindung mit dem Stand der Technik und/oder in einem oder mehreren der zum Stand der Technik erwähnten Dokumenten beschriebene Merkmale aufweisen.

Darüber hinaus kann die Vorrichtung alternativ oder zusätzlich einzelne oder eine Kombination mehrerer zuvor in Verbindung mit dem Verteilergetriebe beschriebene Merkmale aufweisen, ebenso wie das Verteilergetriebe alternativ oder zusätzlich einzelne oder eine Kombination mehrerer zuvor in Verbindung mit der Vorrichtung beschriebene Merkmale aufweisen kann.

Wichtig ist hervorzuheben, dass durch die zuvor beschriebenen Maßnahmen ein Verfahren zur Erkennung der Schaltstellung verwirklicht sein kann, um ein ungewolltes Verdrehen der Schaltwelle im den Schaltbereich des Zwischengetriebes bildenden zweiten Drehwinkelbereich zu vermeiden.

Die Erfindung und deren Vorteile werden im Nachfolgenden anhand von in den Figuren dargestellter Ausführungsbeispiele näher erläutert. Die Größenverhältnisse der einzelnen Elemente zueinander entsprechen in den Figuren nicht immer den realen Größenverhältnissen, da in den Figuren einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verteilergetriebe ausgestaltet sein kann und stellen keine abschließende Begrenzung dar. Es zeigen in schematischer Darstellung:
- Fig. 1: eine Detailansicht einer um einen Drehwinkelbereich verdrehbaren Anordnung einer Kupplungskurvenscheibe auf einer Schaltwelle einer Vorrichtung zur Betätigung eines kupplungsgesteuerten Verteilergetriebes mit zweistufigem Zwischengetriebe entlang der Kupplungskurvenscheibenachse gesehen.
- Fig. 2: eine Vorrichtung zur Betätigung eines kupplungsgesteuerten Verteilergetriebes mit zweistufigem Zwischengetriebe in einer Ansicht entlang der Kupplungskurvenscheibenachse gesehen.
- Fig. 3: ein die Funktionen einer Vorrichtung zur Betätigung eines kupplungsgesteuerten Verteilergetriebes mit zweistufigem Zwischengetriebe in Bezug auf Drehwinkelbereiche deren Schaltwelle darstellendes Diagramm.
- Fig. 4: ein zwei degressive Ausgestaltungen einer linearen Ausgestaltung einer Kurvenbahn einer an einer Kupplungskurvenscheibe einer Vorrichtung zur Betätigung eines kupplungsgesteuerten Verteilergetriebes mit zweistufigem Zwischengetriebe vorgesehenen Kulisse gegenüberstellendes Diagramm.
- Fig. 5: Ein den Verlauf der Betätigungskraft einer Reibungskupplung deren Kupplungsweg gegenüberstellendes Diagramm.
- Fig. 6: eine Vorrichtung zur Betätigung eines kupplungsgesteuerten Verteilergetriebes mit zweistufigem Zwischengetriebe.

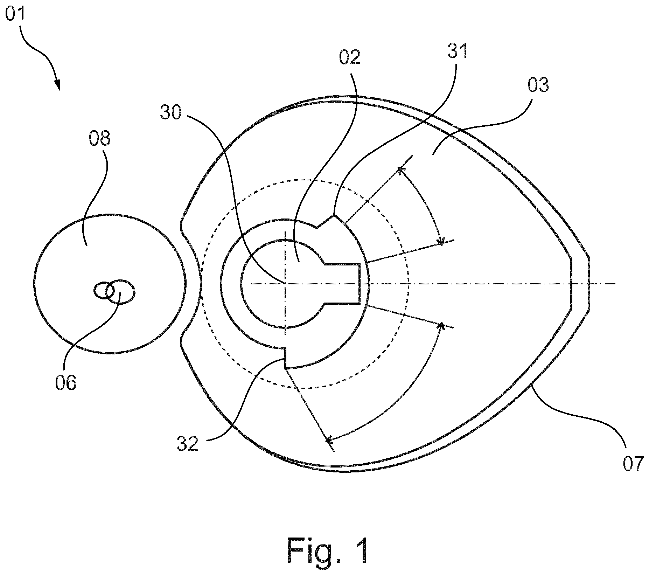

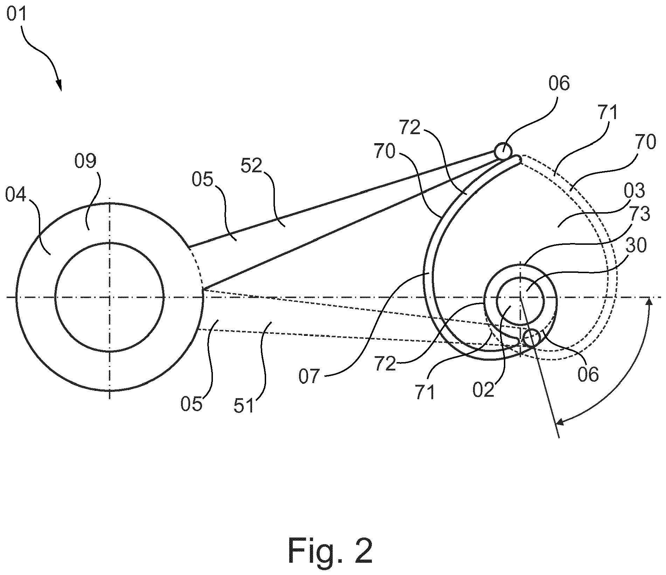

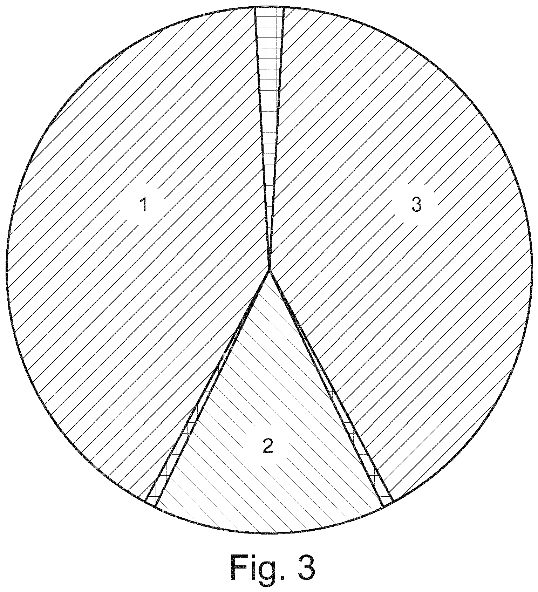

Eine in Fig. 1 und in Fig. 2 ganz oder in Teilen dargestellte Vorrichtung 01 zur Betätigung eines kupplungsgesteuerten Verteilergetriebes mit zweistufigem Zwischengetriebe umfasst:
- eine bevorzugt in entgegengesetzten Drehrichtungen drehbar angetriebene Schaltwelle 02,
- einen Antrieb, vorzugsweise einen Elektromotor, wobei allerdings auch andere Antriebe, wie beispielsweise hydraulische oder pneumatische, um nur einige denkbare Ausgestaltungen zu nennen, oder Kombinationen hiervon denkbar sind, zum Drehen der Schaltwelle 02,
- eine Kupplungskurvenscheibe 03 sowie gegebenenfalls eine Schaltkurvenscheibe, die beide vermittels der Schaltwelle 02 um jeweils eine eigene oder um eine gemeinsame, beispielsweise mit der Achse der Schaltwelle 02 identische Achse, oder von denen eine um die Achse der Schaltwelle 02 und die andere um eine eigene Achse verdrehbar sind, sowie
- einen oder zwei mit einem Betätigungsmechanismus 04 zur Betätigung einer bei Bedarf einen regelbaren Kraftfluss zwischen der Antriebswelle des Verteilergetriebes und der Sekundärwelle des Verteilergetriebes herstellenden Reibungskupplung gekoppelte Scherenhebel 05,
wobei:
- ein Ende 06 wenigstens eines Scherenhebels 05 an oder in einer an der Kupplungskurvenscheibe 03 vorgesehenen Kulisse 07 geführt ist,
- die Kulisse 07 je Scherenhebel 05 jeweils eine Kurvenbahn 71, 72 aufweist, in welcher das Ende 06 des der Kurvenbahn 71, 72 zugeordneten Scherenhebels 05 geführt ist,
- sich die mindestens eine Kurvenbahn 71, 72 um mindestens 360° um eine normal auf der Kupplungskurvenscheibe 03 aufstehende Kupplungskurvenscheibenachse 30 windet (Fig. 2),
- die mindestens eine Kurvenbahn 71, 72 wenigstens einen spiralförmigen Abschnitt 70 mit einer Änderung des Drehwinkels stetig zu- oder abnehmendem Abstand zur Kupplungskurvenscheibenachse 30 aufweist, entlang welchen Abschnitts 70 ein darin geführtes Ende 06 eines Scherenhebels 05 bei einer Drehung der Kupplungskurvenscheibe 03 mit sich änderndem Drehwinkel eine stetig zu- oder abnehmende Änderung dessen Auslenkung vorzugsweise normal zur Kupplungskurvenscheibenachse 30 erfährt (Fig. 2), und
- die Kupplungskurvenscheibe 03 gegenüber der Schaltwelle 02 zwischen zwei Anschlägen 31, 32 um einen einen Neutralbereich bildenden Drehwinkelbereich 2 (Fig. 3) um die Kupplungskurvenscheibenachse 30 verdrehbar angeordnet ist (Fig. 1), innerhalb welchen Drehwinkelbereichs 2 durch Drehung der Schaltwelle 02 zwischen der ersten und der zweiten Schaltstufe des Zwischengetriebes hin und her geschaltet wird, und wobei durch Drehen der Schaltwelle über den Drehwinkelbereich 2 hinaus das Ende 06 des mindestens einen Scherenhebels 05 eine Auslenkung zur Betätigung der Kupplung unter Beibehaltung einer gewählten Schaltstufe erfährt.

Kupplungskurvenscheibenachse 30 bezeichnet hierbei in erster Linie ein geometrisches Merkmal und nicht zwingend ein mechanisches Element im Sinne einer Welle. Bevorzugt ist die Kupplungskurvenscheibe 03 innerhalb des Drehwinkelbereichs 2 um die Kupplungskurvenscheibenachse 30 drehbar gegenüber der Schaltwelle 02 angeordnet.

Wie in Fig. 1 dargestellt, kann die Kupplungskurvenscheibe 03 um den einen Neutralbereich bildenden Drehwinkelbereich 2 verdrehbar auf der Schaltwelle 02 angeordnet sein.

Wie in Fig. 3 dargestellt wird mittels der Vorrichtung 01 in einem ersten Drehwinkelbereich 1 die Kupplung in der ersten Schaltstufe des Zwischengetriebes betätigt, in einem zweiten Drehwinkelbereich 2 zwischen der ersten und der zweiten Schaltstufe des Zwischengetriebes hin und her geschaltet, und in einem dritten Drehwinkelbereich 3 die Kupplung in der zweiten Schaltstufe des Zwischengetriebes betätigt.

Um innerhalb des einen Neutralbereich bildenden zweiten Drehwinkelbereichs 2 zwischen der ersten und der zweiten Schaltstufe des Zwischengetriebes hin und her schalten zu können, steht die Schaltwelle 02 beziehungsweise eine unverdrehbar mit der Schaltwelle 02 verbundene Schaltkurvenscheibe mit dem Zwischengetriebe in derartiger Wirkverbindung, dass ausgehend von der Neutralstellung bei einer Drehung der Schaltwelle 02 in entgegengesetzten Drehrichtungen innerhalb des zweiten Drehwinkelbereichs 2 zwischen den Schaltstufen des Zwischengetriebes gewechselt wird, wobei ab einem Verlassen des Neutralbereichs durch Überschreitung des zweiten Drehwinkelbereichs 2 die durch eine Drehrichtung ausgehend von der Neutralstellung einmal gewählte Schaltstufe des Zwischengetriebes gehalten wird und durch eine dann erfolgende Mitnahme der Kupplungskurvenscheibe 03 bei einer weiteren Drehung der Schaltwelle 02 am Ende bzw. außerhalb des zweiten Drehwinkelbereichs 2 durch eine Auslenkung des mindestens einen Scherenhebels 05 die einen regelbaren Kraftfluss zwischen der Antriebswelle des Verteilergetriebes und der Sekundärwelle des Verteilergetriebes herstellende Reibungskupplung mit zunehmendem Drehwinkel stärker zusammen gepresst wird.

Während innerhalb des den Neutralbereich bildenden zweiten Drehwinkelbereichs 2 zwischen der ersten und der zweiten Schaltstufe des Zwischengetriebes hin und her geschaltet wird, steht die Kupplungskurvenscheibe 03 durch den mindestens einen mit seinem Ende 06 in der Kulisse 07 geführten Scherenhebel 05 in einer Neutralposition gehalten still (Fig. 1).

Erst wenn die Schaltwelle 02 über den zweiten Drehwinkelbereichs 2 hinaus gedreht wird, beginnt sich die Kupplungskurvenscheibe 03 über einen Anschlag 31, 32 mit zu verdrehen. Damit stehen in beiden Drehrichtungen jeweils ein Drehwinkelbereich von mindestens etwa 180°, vorzugsweise von bis zu oder gar über 360° nur für die Betätigung der Reibungskupplung zur Verfügung.

Hierdurch kann ein Verdrehwinkel von über 360° einhergehend mit einem um zumindest etwa 25% im Vergleich zu einem eingeschränkten Verdrehwinkel von weniger als 360° erhöhten Übersetzungsverhältnis erreicht werden.

Der mindestens eine Scherenhebel 05 kann an seinem in der Kulisse 07 geführte Ende 06 mit wenigstens einer an oder in der Kulisse 07 abwälzenden drehbar an dem Ende 06 gelagerten Rolle 08 versehen sein (Fig. 1).

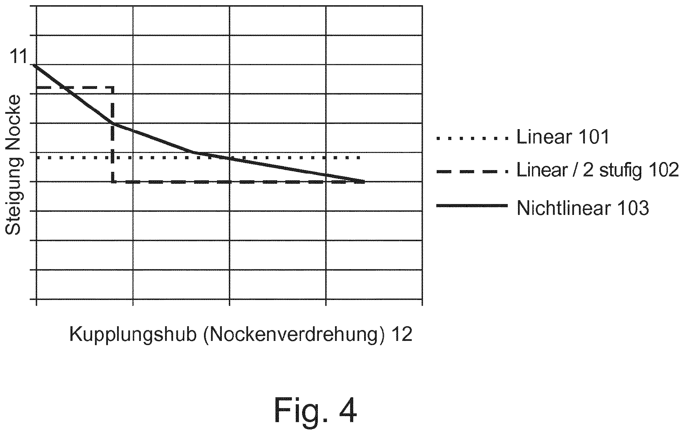

Die mindestens eine Kurvenbahn 71, 72 der an der Kupplungskurvenscheibe 03 vorgesehenen Kulisse 07 kann eine degressive Ausgestaltung hinsichtlich der durch sie mit zunehmendem Drehwinkel zumindest in einer Drehrichtung, vorzugsweise sowohl in der einen, als auch in der anderen, entgegengesetzten Drehrichtung bewirkten zunehmenden Auslenkung des mindestens einen mit seinem Ende 06 in ihr geführten Scherenhebels 05 aufweisen, wie in Fig. 4 dargestellt. Dort bezeichnet 11 «Steigung Nocke» den Grad der Änderung der Auslenkung im Verhältnis zum als 12 «Kupplungshub (Nockenverdrehung)» bezeichneten Grad der Änderung des Drehwinkels. Dargestellt sind drei verschiedene Verläufe, mit 101 «Linear» bezeichnet eine lineare Ausgestaltung mit einem linearen Verhältnis von Auslenkung und Drehwinkel, mit 102 «Linear / 2 stufig» bezeichnet eine degressive Ausgestaltung mit einem in zwei Abschnitte unterteilten, linearen Verhältnis von Auslenkung und Drehwinkel mit unterschiedlicher Proportionalität der beiden Abschnitte, und mit 103 «Nichtlinear» bezeichnet eine degressive Ausgestaltung mit stetig veränderlicher Proportionalität des Verhältnisses von Auslenkung und Drehwinkel.

Demnach kann die eine bei konstanter Drehwinkeländerung unterschiedlich starke Auslenkungsänderungen des Scherenhebels 05 bewirkende degressive Ausgestaltung der mindestens einen Kurvenbahn 71, 72 der Kulisse 07 entweder auf Basis einer in mathematischem Sinne stetigen mathematischen Funktion (103), oder mit zwei oder mehr unterschiedlichen, jedoch für sich jeweils konstanten Steigungen (102) ausgeführt sein.

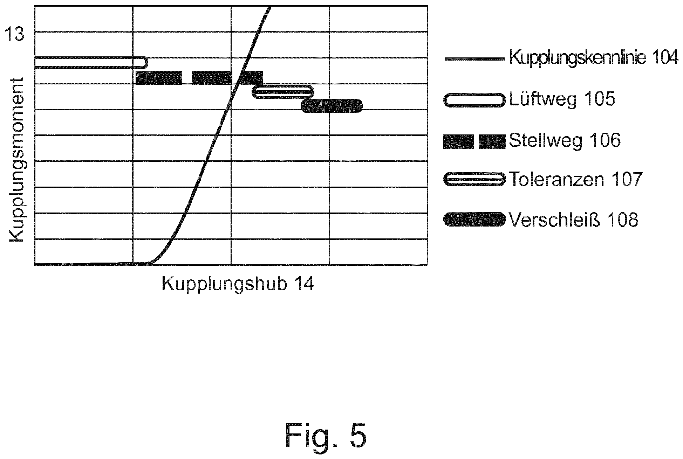

Hintergrund der degressiven Ausgestaltung ist, dass sich der in Fig. 5 mit 14 «Kupplungshub» bezeichnete, beim Zusammenpressen der Kupplung zurückgelegte Kupplungsweg, um den die Reibungskupplung zu deren Betätigung zusammen gepresst werden muss, im Wesentlichen in drei Abschnitte 105, 107 und 108, sowie 106 aufteilt: Abschnitt 105: Lüftweg, Abschnitt 107 und 108: Toleranzen und Verschleiß, sowie Abschnitt 106: Betätigungs- beziehungsweise Stellweg. Im Lüftweg sind die notwendigen Kräfte sehr gering. Dieser Bereich kann daher mit einer hohen Steigung einhergehend mit einem geringen Übersetzungsverhältnis der mindestens einen Kurvenbahn 71, 72 der Kulisse 07 durchfahren werden. Durch die hohe Steigung wird für einen vorgegebenen Lüftweg der Reibungskupplung nur ein geringer Drehwinkel der Schaltwelle 02 benötigt, wodurch ein größerer zum Zusammenpressen der Reibungskupplung zur Verfügung stehender Teil des ersten Drehwinkelbereichs 1 und des dritten Drehwinkelbereichs 3, innerhalb denen die Reibungskupplung betätigt wird, verbleibt. In diesem verbleibenden Teil weist die mindestens eine Kurvenbahn 71, 72 der Kulisse 07 eine geringe Steigung auf, entsprechend einem hohen Übersetzungsverhältnis.

Die degressive Ausgestaltung ist hierbei bevorzugt derart ausgebildet, dass die Kurvenbahn entlang ihres Verlaufs um die Kupplungskurvenscheibenachse 30 herum unterschiedliche Steigungen weg und/oder hin zur Kupplungskurvenscheibenachse 30 im Bereich eines Lüftwegs der Reibungskupplung und im Bereich einer Kupplungsaktuierung, in dem am Ende des Lüftwegs die Reibungskupplung zusammengepresst wird, aufweist.

Fig. 5 zeigt hierzu den als 104 «Kupplungskennlinie» bezeichneten Verlauf der mit 13 «Kupplungsmoment» bezeichneten erforderlichen Kraft zum Zusammenpressen der Reibungskupplung über dem mit 14 «Kupplungshub» bezeichneten, beim Zusammenpressen der Kupplung zurückgelegten Kupplungsweg.

Dabei ist ersichtlich, dass entlang der verschiedenen, 105 «Lüftweg», 106 «Stellweg», 107 «Toleranzen» sowie 108 «Verschleiß» bezeichneten Abschnitte des Verlaufs 104 unterschiedliche Kräfte aufgebracht werden müssen. So ist beispielsweise kaum Kraft erforderlich, um den Abschnitt 105 zu überwinden, wohingegen der Kraftaufwand stark ansteigt, um die darauffolgenden Abschnitte 106, 107 und 108 zu überwinden.

Die degressive Ausgestaltung erlaubt das durch den Grad der Änderung der Auslenkung über der Änderung des Drehwinkels beeinflussbare Übersetzungsverhältnis an diesen Umstand anzupassen.

Beispielsweise kann ausgehend von der in Fig. 1 dargestellten Neutralstellung im Abschnitt 105 des Lüftwegs zunächst eine hohe Steigung vorgesehen, wohingegen im Anschluss hieran im Abschnitt 106 der Kupplungsaktuierung eine flache Steigung vorgesehen sein kann.

Hierdurch kann das Übersetzungsverhältnis im Abschnitt 106 der Kupplungsaktuierung um etwa 20% im Vergleich zu einer linearen Ausgestaltung erhöht werden.

Der mit dem oder den Scherenhebeln 05 gekoppelte, zur Betätigung der Reibungskupplung eines kupplungsgesteuerten Verteilergetriebes mit zweistufigem Zwischengetriebe vorgesehene Betätigungsmechanismus 04 kann zwei gegeneinander verdrehbare Rampenringe 09 umfassen, welche entweder beide gegeneinander verdrehbar sind, oder von denen einer fest stehend ausgeführt und der andere gegen den fest stehenden verdrehbar ist. Wenigstens ein Rampenring 09 ist mit einem Scherenhebel 05 verbunden oder mit diesem einstückig. Wesentlich ist, dass ein Verdrehen der beiden Rampenringe 09 im Gegensinn diese in axialer Richtung auseinandertreibt.

Dies kann vermittels eines fest stehenden ersten Rampenrings 09 und eines mit einem Scherenhebel 05 verbundenen oder einstückigen zweiten Rampenrings 09 verwirklicht sein, wobei der zweite Rampenring 09 ausgehend von einer Neutralstellung in beiden Richtungen gegen den ersten Rampenring 09 verdrehbar ist und ein Verdrehen des zweiten Rampenrings 09 sowohl in einer ersten, als auch in einer entgegengesetzten zweiten Drehrichtung die beiden Rampenringe 09 axial auseinandertreibt.

Alternativ können zwei Scherenhebel 05 vorgesehen sein, wie dies in Fig. 2 dargestellt ist.

Dem Ende 06 jeden Scherenhebels 05 ist hierbei eine Kurvenbahn 71, 72 der Kulisse 07 zugeordnet. In jeder Drehrichtung der Kupplungskurvenscheibe windet sich eine Kurvenbahn 71, 72 ausgehend von einer beispielsweise in etwa in der Mitte der Kurvenbahn 71, 72 liegenden Neutralstellung um mindestens 180°, bevorzug um bis zu oder gar über 360° um die Kupplungskurvenscheibenachse 30, so dass mehr als eine ganze Umdrehung der Kupplungskurvenscheibe 03 erforderlich ist, damit ein in einer Kurvenbahn 71, 72 geführtes Ende 06 eines Scherenhebels 05 vom Anfang einer Kurvenbahn 71, 72 beispielsweise via der Neutralstellung zum Ende der Kurvenbahn 71, 72 gelangt.

Um eine zur Betätigung eines beispielsweise zwei Rampenringe 09 umfassenden Betätigungsmechanismus 04, dessen Rampenringe 09 jeweils mit einem Scherenhebel 05 verbunden oder einstückig sind, erforderliche, gegensinnige Bewegung zu erhalten, können die Enden 06 der beiden Scherenhebel 05 in Bezug auf die Kupplungskurvenscheibenachse 30 einander diametral gegenüberliegend in jeweils einer eigenen Kurvenbahn 71, 72 geführt sein, wie dies in Fig. 2 dargestellt ist.

Die Kurvenbahnen 71, 72 für die Enden 06 der beiden Scherenhebel 05 können auf gegenüberliegenden Stirnseiten der Kupplungskurvenscheibe 03 vorgesehen sein. Vorzugsweise steht die Kupplungskurvenscheibenachse 30 normal auf den gegenüberliegenden Stirnseiten auf.

Die Kurvenbahnen 71, 72 können in Bezug auf die Kupplungskurvenscheibenachse 30 punktsymmetrisch ausgeführt und damit auf der selben Stirnseite der Kupplungskurvenscheibe 03 vorgesehen, jedoch um 180° zueinander verdreht angeordnet sein.

Hierbei kann eine einem ersten Scherenhebel 51 zugeordnete erste Kurvenbahn 71 und eine einem zweiten Scherenhebel 52 zugeordnete zweite Kurvenbahn 72 auf der selben Stirnseite der Kupplungskurvenscheibe 03 vorgesehen sein, wobei die Kurvenbahnen 71, 72 ineinander liegend spiralförmig um die normal auf der Stirnseite der Kupplungskurvenscheibe 03 aufstehende Kupplungskurvenscheibenachse 30 umlaufend ausgebildet sind.

Grundsätzlich ist eine punktsymmetrische Ausgestaltung der Kurvenbahnen 71, 72 auch bei einer Anordnung auf gegenüberliegenden Stirnseiten der Kupplungskurvenscheibe 03 möglich.

Die Kurvenbahnen 71, 72 können derart an der Kupplungskurvenscheibe 03 vorgesehen ausgebildet sein, dass ausgehend von einer Neutralstellung der Kupplungskurvenscheibe 03, in welcher beide Scherenhebel 05 eine Ausgangsstellung einnehmen, bei einer Drehung in einer ersten Drehrichtung ein erster Scherenhebel 51 mit zunehmendem Drehwinkel eine zunehmende Auslenkung weg von der Kupplungskurvenscheibenachse 30 oder hin zu der Kupplungskurvenscheibenachse 30 erfährt, wohingegen ein zweiter Scherenhebel 52 seine Ausgangsstellung beibehält, und bei einer Drehung in einer der ersten Drehrichtung entgegengesetzten zweiten Drehrichtung der zweite Scherenhebel 52 mit zunehmendem Drehwinkel eine zunehmende Auslenkung weg von der Kupplungskurvenscheibenachse 30 oder hin zu der Kupplungskurvenscheibenachse 30 erfährt, wohingegen der erste Scherenhebel 51 seine Ausgangsstellung beibehält. Fig. 2 zeigt eine Ausgestaltung, bei der ausgehend von einer Neutralstellung bei einer Drehung der Kupplungskurvenscheibe 03 in einer ersten Drehrichtung der erste Scherenhebel 51 mit zunehmendem Drehwinkel eine zunehmende Auslenkung weg von der Kupplungskurvenscheibenachse 30 erfährt, wohingegen ein zweiter Scherenhebel 52 seine Ausgangsstellung beibehält, und ebenfalls ausgehend von einer Neutralstellung bei einer Drehung in einer der ersten Drehrichtung entgegengesetzten zweiten Drehrichtung der zweite Scherenhebel 52 mit zunehmendem Drehwinkel eine zunehmende Auslenkung weg von der Kupplungskurvenscheibenachse 30 erfährt, wohingegen der erste Scherenhebel 51 seine Ausgangsstellung beibehält.

Dies kann beispielsweise vermittels zweier Kurvenbahnen 71, 72 mit einem ersten spiralförmigen Abschnitt 70 für die zu- oder abnehmende Auslenkung weg von oder hin zu der Kupplungskurvenscheibenachse 30, der in einen ähnlich einer Endlosrille in gleichbleibendem Abstand um die Kupplungskurvenscheibenachse 30 umlaufenden zweiten Abschnitt 73 übergeht, verwirklicht sein.

Die mindestens eine Kurvenbahn 71, 72 kann alternativ so ausgebildet sein, dass ausgehend von einer Neutralstellung ein mit seinem Ende 06 in der Kurvenbahn 71, 72 geführter Scherenhebel 05 bei einer Drehung der Kupplungskurvenscheibe 03 in einer ersten Drehrichtung mit zunehmendem Drehwinkel eine zunehmende Auslenkung weg von der Kupplungskurvenscheibenachse 30 und in einer der ersten Drehrichtung entgegengesetzten zweiten Drehrichtung eine abnehmende Auslenkung hin zur Kupplungskurvenscheibenachse 30 erfährt.

Zusammengefasst kann demnach die mindestens eine Kurvenbahn 71, 72 so ausgebildet sein, dass ausgehend von einer Neutralstellung ein mit seinem Ende 06 in der Kurvenbahn 71, 72 geführter Scherenhebel 05, 51 bei einer Drehung der Kupplungskurvenscheibe 03 in einer ersten Drehrichtung und/oder in einer der ersten Drehrichtung entgegengesetzten zweiten Drehrichtung mit zunehmendem Drehwinkel eine zunehmende Auslenkung weg von der Kupplungskurvenscheibenachse 30 oder eine abnehmende Auslenkung hin zur Kupplungskurvenscheibenachse 30 erfährt, wohingegen ein gegebenenfalls vorgesehener verbleibender Scherenhebel 05, 52 bei zunehmendem Drehwinkel in der selben Drehrichtung keine oder eine Auslenkung in Bezug auf die Kupplungskurvenscheibenachse 30 erfährt, welche eine gegensinnige Bewegung des verbleibenden Scherenhebels 05, 52 zur Folge hat, beispielsweise indem das Ende 06 des verbleibenden Scherenhebels 05, 52 in Bezug auf die Kupplungskurvenscheibenachse 30 dem Ende 06 des anderen Scherenhebels 05, 51 diametral gegenüberliegend angeordnet ist und in eine punktsymmetrisch zur dem Ende 06 des anderen Scherenhebels 05, 51 zugeordneten Kurvenbahn 71 angeordneten Kurvenbahn 72 geführt wird.

Wichtig ist hervorzuheben, dass wenn zwei mit ihren Enden 06 jeweils in einer Kurvenbahn 71, 72 der Kulisse 07 geführte Scherenhebel 05, 51, 52 vorgesehen sind, die beiden jeweils einem Ende 06 eines Scherenhebels 05 zugeordneten Kurvenbahnen 71, 72 so ausgeführt sein können, dass in beiden Drehrichtungen die Scherenhebel 05 gegensinnig verschwenken.

Dies kann wie bereits erwähnt beispielsweise durch eine in Bezug auf die Kupplungskurvenscheibenachse 30 diametral gegenüberliegende Führung der Enden der Scherenhebel 05, 51, 52 in oder an der Kulisse 07 verwirklicht sein.

Grundsätzlich ist eine Ausführung mit nur einem mit seinem beispielsweise mit einer Rolle versehenen Ende in einer Kulisse der Kupplungskurvenscheibe geführten Scherenhebel denkbar, oder eine Ausführung mit einem mit seinem beispielsweise mit einer Rolle versehenen Ende in einer Kulisse der Kupplungskurvenscheibe geführten ersten Scherenhebel und einem zweiten, sich beispielsweise an einem Gehäuse oder an der Schaltwelle abstützenden zweiten Scherenhebel.

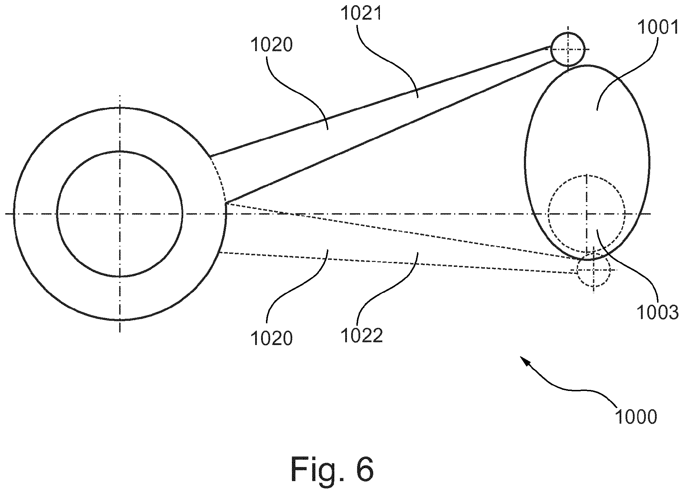

Wichtig ist hervorzuheben, dass bei einer in Fig. 6 dargestellten Vorrichtung 1000 zur Betätigung eines kupplungsgesteuerten Verteilergetriebes mit zweistufigem Zwischengetriebe durch die auch als Steuernocke 1001 bezeichnete Kupplungskurvenscheibe zwei Scherenhebel 1020 gegeneinander verdreht werden, welche dann beispielsweise über schraubenförmige Kugelrampenmechanismen eine Axialkraft auf die Kupplung ausüben. Einer der beiden Scherenhebel 1021 kann sich dabei mit seinem Ende beispielsweise auf dem Umfang der Steuernocke 1001 bewegen, wohingegen sich der andere Scherenhebel 1022 auf der Schaltwelle 1003 oder an einem Gehäuse eines kupplungsgesteuerten Verteilergetriebes mit zweistufigem Zwischengetriebe, welches unter anderem beispielsweise zumindest einen Teil der Vorrichtung zur Betätigung des kupplungsgesteuerten Verteilergetriebes mit zweistufigem Zwischengetriebe beherbergen kann, abstützt.

Demgegenüber ist bei der Vorrichtung 01 vorgesehen, zumindest für das beispielsweise mit wenigstens einer Rolle 08 versehene Ende 06 eines Scherenhebels 05, vorzugsweise für die beispielsweise mit jeweils wenigstens einer Rolle 08 versehenen Enden 06 beider Scherenhebel 51, 52, eine an der Kupplungskurvenscheibe 03 vorgesehene Kulisse 07 zur Führung eines Endes 06 wenigstens eines Scherenhebels 05 mit je einer eigenen spiralförmigen Kurvenbahn 71, 72 je zu führendem Ende 06 eines Scherenhebels 05 vorzusehen. Hierdurch wird bei der erfindungsgemäßen Vorrichtung 01 ein Drehwinkelbereich der Kupplungskurvenscheibe 03 erhalten, der 360° überschreiten kann, wodurch im Vergleich zu einer Drehung um weniger als 360° eine geringere Steigung der einen oder der beiden Kurvenbahnen 71, 72 in radialer Richtung zur Kupplungskurvenscheibenachse 30 gesehen in Bezug auf ein vorgegebenes Inkrement des Drehwinkel gewählt und hierdurch ein höheres Übersetzungsverhältnis verwirklicht werden kann.

Die Vorrichtung 01 ist vorteilhaft in Verbindung mit einem kupplungsgesteuerten Verteilergetriebe mit zweistufigem Zwischengetriebe einsetzbar, welches:
- eine Antriebswelle,
- eine mit der Antriebswelle permanent gekoppelte, beispielsweise mit dieser fest verbundene oder einstückige Primärwelle,
- eine gegebenenfalls unter einem Achsversatz zur Antriebswelle angeordnete Sekundärwelle,
- gegebenenfalls ein zwischen Sekundärwelle und Antriebswelle angeordnetes, deren gegebenenfalls vorhandenen Achsversatz überbrückendes Versatzgetriebe,
- eine zwischen Antriebswelle und Sekundärwelle angeordnete, diese bei Bedarf zu deren Betrieb mit der Antriebswelle koppelnde und bei Bedarf zu deren Stilllegung von der Antriebswelle entkoppelnde Reibungskupplung mit mindestens einem Reibpaar bestehend aus einer mit einer angetriebenen Welle unverdrehbar verbundenen ersten Reibscheibe und einer mit einer anzutreibenden Welle unverdrehbar verbundenen zweiten Reibscheibe,
- einen Betätigungsmechanismus 04, der bei dessen Betätigung eine ein Zusammenpressen der Reibungskupplung bewirkende Axialkraft auf das eine oder die mehreren Reibpaare der Reibungskupplung ausübt, und
- ein zweistufiges Zwischengetriebe mit einer ersten und einer zweiten Schaltstufe umfasst. Das Verteilergetriebe zeichnet sich durch eine zuvor beschriebene Vorrichtung 01 zur Betätigung eines kupplungsgesteuerten Verteilergetriebes mit zweistufigem Zwischengetriebe aus, welche einerseits die Reibungskupplung betätigt und andererseits die Schaltstufen des Zwischengetriebes wechselt. Der Betätigungsmechanismus 04 ist hierbei zu dessen Betätigung mit dem mindestens einen mit seinem Ende 06 in der Kulisse 07 der Kupplungskurvenscheibe 03 geführten Scherenhebel 05 gekoppelt und/oder steht mit diesem in Wirkverbindung.

Die permanent mit der Antriebswelle gekoppelte Primärwelle ist entweder fest mit der Antriebswelle verbunden oder mit dieser einstückig.

Die Sekundärwelle kann unter einem Achsversatz zur Antriebswelle angeordnet sein. In diesem Fall ist ein den Achsversatz überbrückendes Versatzgetriebe zwischen Sekundärwelle und Antriebswelle angeordnet.

Es ist ersichtlich, dass die Erfindung durch folgende, grundsätzlich beliebig kombinierbaren Maßnahmen zur Erhöhung der Übersetzung einer seitens ihres Wirkungsgrads grundsätzlich sehr guten Kupplungskurvenscheibe 03 im Gesamten und/oder in Teilbereichen verwirklicht sein kann:
- Um den Schaltwinkel verdrehbare Kupplungskurvenscheibe 03 zur Kupplungsbetätigung. Die Kupplungskurvenscheibe 03 ist um einen auch als Freiwinkel bezeichneten Drehwinkelbereich 2 drehbar auf der Schaltwelle 02 gelagert. Durch Drehung der Schaltwelle 02 innerhalb des Drehwinkelbereichs 2 wird zwischen den Schaltstufen des Zwischengetriebes hin und her geschaltet. Bei einer Überschreitung des Drehwinkelbereichs 2 sowohl in der einen, als auch in der entgegengesetzten Drehrichtung wird die Kupplungskurvenscheibe 03 via eines der beiden Anschläge 31, 32 von der Schaltwelle 02 mitgenommen. Hierdurch verbleibt ein Drehwinkelbereich 1 und/oder ein Drehwinkelbereich 3 der Kurvenscheibe von 360° ausschließlich für die Kupplungsbetätigung, wodurch sich das Übersetzungsverhältnis der Kupplungskurvenscheibe 03 um etwa 25% erhöhen lässt.
- Degressive Geometrie der Kupplungskurvenscheibe 03. Durch unterschiedliche Steigung der Kupplungskurvenscheibe 03 mit einer hohen Steigung im Bereich des Lüftwegs und einer flachen Steigung im Bereich der Kupplungsbetätigung kann das Übersetzungsverhältnis nochmals um 20% erhöht werden.
- Vergrößerter Verdrehwinkel: Durch eine spiralförmige Ausführung der mindestens einen Kurvenbahn 71, 72 der an der Kupplungskurvenscheibe 03 vorgesehenen Kulisse 07 einhergehend mit separaten Kurvenbahnen 71, 72 für beide Scherenhebel 05, 51, 52 kann ein Verdrehwinkel der Kupplungskurvenscheibe 03 von über 360° erhalten werden.

Wichtig ist zu erwähnen, dass zur Bestimmung der aktuellen Drehwinkelposition der Kupplungskurvenscheibe 03 vorteilhaft ein Sensor, beispielsweise ein Drehwinkelsensor und/oder beispielsweise im Falle eines anderen, als eines aufsummierenden Drehwinkelsensors, beispielsweise eines eine Markierung oder dergleichen beispielsweise am Außenumfang der Kupplungskurvenscheibe 03 oder an der Schaltwelle 02 erfassenden Sensors, wie etwa eines optischen Sensors, eine Sensorlogik vorgesehen sein können, deren Funktion zur Erfüllung beispielsweise von Sicherheitszielen eine eindeutige Erfassung eines über 360° hinausgehenden Drehwinkelbereichs erlaubt. Hintergrund ist, dass ein Positionssensor, der nur in einem Drehwinkelbereich zwischen 0° und 360° messen kann, in einem durch einen über 360° hinausgehenden Drehwinkelbereich auftretenden Überlappungsbereich kein eindeutiges Signal liefern kann.

Die Erfindung ist insbesondere im Bereich der Herstellung von kupplungsgesteuerten Verteilergetrieben 01 mit zweistufigem Zwischengetriebe gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Vorrichtung (01) zur Betätigung eines kupplungsgesteuerten Verteilergetriebes mit zweistufigem Zwischengetriebe, umfassend:
- eine drehbar angetriebene Schaltwelle (02),
- einen Antrieb zum Drehen der Schaltwelle (02),
- eine Kupplungskurvenscheibe (03), die vermittels der Schaltwelle (02) um eine Kupplungskurvenscheibenachse (30) verdrehbar ist, sowie
- mindestens einen Scherenhebel (05, 51, 52),
wobei:
- ein Ende (06) wenigstens eines Scherenhebels (05, 51, 52) in einer an der Kupplungskurvenscheibe (03) vorgesehenen Kulisse (07) geführt ist,
- die Kulisse (07) je Scherenhebel (05, 51, 52) jeweils eine Kurvenbahn (71, 72) aufweist, in welcher das Ende (06) des der Kurvenbahn (71, 72) zugeordneten Scherenhebels (05, 51, 52) geführt ist, und
- die Kurvenbahn (71, 72) mindestens einen spiralförmigen Abschnitt (70) mit stetig zu- oder abnehmendem Abstand zur Kupplungskurvenscheibenachse (30) aufweist, entlang welchen Abschnitts (70) ein darin geführtes Ende (06) eines Scherenhebels (05, 51, 52) bei einer Drehung der Kupplungskurvenscheibe (03) mit zunehmendem Drehwinkel eine stetig zu- oder abnehmende Änderung dessen Auslenkung zur Kupplungskurvenscheibenachse (30) erfährt,
**dadurch gekennzeichnet, dass**
- sich die Kurvenbahn (71, 72) um mindestens 360° um die Kupplungskurvenscheibenachse (30) windet, und
- die Kupplungskurvenscheibe (03) gegenüber der Schaltwelle (02) zwischen zwei Anschlägen (31, 32) um einen Drehwinkelbereich (2) verdrehbar angeordnet ist, so dass durch Drehung der Schaltwelle (02) innerhalb des zwischen diesen Anschlägen (31, 32) liegenden Drehwinkelbereichs (2) zwischen den Schaltstufen des Zwischengetriebes hin und her geschaltet wird und durch Drehen der Schaltwelle (02) über den Drehwinkelbereich (2) hinaus das Ende des mindestens einen Scherenhebels (05, 51, 52) eine Auslenkung zur Betätigung der Kupplung unter Beibehaltung einer gewählten Schaltstufe erfährt.

2. Vorrichtung nach Anspruch 1, wobei der mindestens eine Scherenhebel (05, 51, 52) an seinem in der Kulisse (07) geführte Ende (06) mit wenigstens einer in der Kulisse (07) abwälzenden, drehbar gelagerten Rolle (08) versehen ist.

3. Vorrichtung nach Anspruch 1 oder 2, wobei die mindestens eine Kurvenbahn (71, 72) eine degressive Ausgestaltung hinsichtlich der durch sie mit zunehmendem Drehwinkel bewirkten zunehmenden Auslenkung des mindestens einen mit seinem Ende (06) in ihr geführten Scherenhebels (05, 51, 52) aufweist.

4. Vorrichtung nach Anspruch 3, wobei die degressive Ausgestaltung derart ausgebildet ist, dass die Kurvenbahn (71, 72) entlang ihres Verlaufs um die Kupplungskurvenscheibenachse (30) herum unterschiedliche Steigungen weg und/oder hin zur Kupplungskurvenscheibenachse (30) aufweist.

5. Vorrichtung nach Anspruch 4, wobei ausgehend von der Neutralstellung zunächst eine hohe Steigung vorgesehen, wohingegen im Anschluss hieran eine flache Steigung vorgesehen ist.

6. Vorrichtung nach einem der Ansprüche 3, 4 oder 5, wobei die degressive Ausgestaltung der mindestens einen Kurvenbahn (71, 72) auf Basis einer in mathematischem Sinne stetigen mathematischen Funktion, oder mit zwei oder mehr unterschiedlichen, jedoch für sich jeweils konstanten Steigungen ausgeführt ist.

7. Vorrichtung nach einem der voranstehenden Ansprüche, wobei die Kupplungskurvenscheibe (03) um den Drehwinkelbereich (2) verdrehbar auf der Schaltwelle (02) angeordnet ist.

8. Vorrichtung nach einem der voranstehenden Ansprüche, wobei zwei Scherenhebel (05, 51, 52) vorgesehen sind.

9. Vorrichtung nach Anspruch 8, wobei die Enden (06) der beiden Scherenhebel (05, 51, 52) in Bezug auf die Kupplungskurvenscheibenachse (30) einander diametral gegenüberliegend in jeweils einer eigenen Kurvenbahn (71, 72) geführt sind.

10. Vorrichtung nach Anspruch 8 oder 9, wobei die Kurvenbahnen (71, 72) für die beiden Scherenhebel (05, 51, 52) auf gegenüberliegenden Stirnseiten der Kupplungskurvenscheibe (03) vorgesehen sind.

11. Vorrichtung nach Anspruch 8, 9 oder 10, wobei die Kurvenbahnen (71, 72) in Bezug auf die Kupplungskurvenscheibenachse (30) punktsymmetrisch ausgeführt sind.

12. Vorrichtung nach Anspruch 8, 9 oder 10, wobei die Kurvenbahnen (71, 72) derart ausgebildet sind, dass ausgehend von einer Neutralstellung der Kupplungskurvenscheibe (03), in welcher beide Scherenhebel (05, 51, 52) eine Ausgangsstellung einnehmen, bei einer Drehung in einer ersten Drehrichtung ein erster Scherenhebel (05, 51) mit zunehmendem Drehwinkel eine zunehmende Auslenkung weg von der Kupplungskurvenscheibenachse (30) oder hin zu der Kupplungskurvenscheibenachse (30) erfährt, wohingegen ein zweiter Scherenhebel (05, 52) seine Ausgangsstellung beibehält, und bei einer Drehung in einer der ersten Drehrichtung entgegengesetzten zweiten Drehrichtung der zweite Scherenhebel (05, 52) mit zunehmendem Drehwinkel eine zunehmende Auslenkung weg von der Kupplungskurvenscheibenachse (30) oder hin zu der Kupplungskurvenscheibenachse (30) erfährt, wohingegen der erste Scherenhebel (05, 51) seine Ausgangsstellung beibehält.

13. Vorrichtung nach einem der voranstehenden Ansprüche, wobei die mindestens eine Kurvenbahn (71, 72) so ausgebildet ist, dass ausgehend von einer Neutralstellung ein mit seinem Ende (06) in der Kurvenbahn (71, 72) geführter Scherenhebel (05, 51, 52) bei einer Drehung der Kupplungskurvenscheibe (03) in einer ersten Drehrichtung mit zunehmendem Drehwinkel eine zunehmende Auslenkung weg von der Kupplungskurvenscheibenachse (30) und in einer der ersten Drehrichtung entgegengesetzten zweiten Drehrichtung eine abnehmende Auslenkung hin zur Kupplungskurvenscheibenachse (30) erfährt.

14. Kupplungsgesteuertes Verteilergetriebe mit zweistufigem Zwischengetriebe, umfassend:
- eine Antriebswelle,
- eine mit der Antriebswelle permanent gekoppelte Primärwelle,
- eine Sekundärwelle,
- eine zwischen Antriebswelle und Sekundärwelle angeordnete, diese bei Bedarf zu deren Betrieb mit der Antriebswelle koppelnde und bei Bedarf zu deren Stilllegung von der Antriebswelle entkoppelnde Reibungskupplung mit mindestens einem Reibpaar bestehend aus einer mit einer angetriebenen Welle unverdrehbar verbundenen ersten Reibscheibe und einer mit einer anzutreibenden Welle unverdrehbar verbundenen zweiten Reibscheibe,
- einen Betätigungsmechanismus (04), der bei dessen Betätigung eine ein Zusammenpressen der Reibungskupplung bewirkende Axialkraft auf das eine oder die mehreren Reibpaare der Reibungskupplung ausübt,
- ein zweistufiges Zwischengetriebe mit einer ersten und einer zweiten Schaltstufe, sowie eine Vorrichtung (01) nach einem der Ansprüche 1 bis 13, wobei der Betätigungsmechanismus (04) mit dem mindestens einen Scherenhebel (05, 51, 52) gekoppelt ist und durch eine Auslenkung des Endes (06) des mindestens einen Scherenhebels (05, 51, 52) betätigt wird.

15. Verteilergetriebe nach Anspruch 14, wobei.
- die Primärwelle fest mit der Antriebswelle verbunden oder mit dieser einstückig ist, und/oder
- die Sekundärwelle unter einem Achsversatz zur Antriebswelle angeordnet ist, und ein den Achsversatz überbrückendes Versatzgetriebe zwischen Sekundärwelle und Antriebswelle angeordnet ist, und/oder
- der Betätigungsmechanismus (04) zwei gegeneinander verdrehbare Rampenringe (09) umfasst, welche beide gegeneinander verdrehbar sind, oder von denen einer fest stehend ausgeführt und der andere gegen den fest stehenden verdrehbar ist, wobei wenigstens ein Rampenring (09) mit einem Scherenhebel (05, 51, 52) verbunden oder mit diesem einstückig ist.

## Claims

1. Device (01) for actuating a clutch-controlled transfer case having a two-stage intermediate gearing, comprising:
- a rotatably driven selector shaft (02),
- a drive for rotating the selector shaft (02),
- a clutch cam disk (03), which can be rotated about a clutch cam disk axis (30) by means of the selector shaft (02), and
- at least one scissor lever (05, 51, 52),
wherein:
- one end (06) of at least one scissor lever (05, 51, 52) is guided in a gate (07) provided on the clutch cam disk (03),
- the gate (07) has a curved path (71, 72) for each scissor lever (05, 51, 52), in which curved path the end (06) of the scissor lever (05, 51, 52) associated with the curved path (71, 72) is guided, and
- the curved path (71, 72) has at least one helical segment (70) having a continuously increasing or decreasing distance from the clutch cam disk axis (30), along which segment (70) one end (06) of a scissor lever (05, 51, 52) guided therein experiences a continuously increasing or decreasing change in deflection with respect to the clutch cam disk axis (30) during a rotation of the clutch cam disk (03) with increasing angle of rotaion,
**characterized in that**
- the curved path (71, 72) winds around the clutch cam disk axis (30) by at least 360°, and
- the clutch cam disk (03) is disposed in such a way that the clutch cam disk can be rotated with respect to the selector shaft (02) between two stops (31, 32) by an angle-of-rotation range (2) such that, by means of rotation of the selector shaft (02) within the angle-of-rotation range (2) situated between said stops (31, 32), shifting back and forth between the shifting stages of the intermediate gearing occurs, and, by means of rotation of the selector shaft (02) beyond the angle-of-rotation range (2), the end of the at least one scissor lever (05, 51, 52) experiences a deflection for actuating the clutch while a selected shifting stage is maintained.

2. Device according to Claim 1, wherein the at least one scissor lever (05, 51, 52) is provided, at its end (06) guided in the gate (07), with at least one rotatably supported roller (08), which rolls in the gate (07).

3. Device according to Claim 1 or 2, wherein the at least one curved path (71, 72) has a degressive configuration with regard to the deflection of the at least one scissor lever (05, 51, 52), which is guided via its end (06) in the curved path, which deflection increases as the angle of rotation increases.

4. Device according to Claim 3, wherein the degressive configuration is designed in such a way that the curved path (71, 72), along its progression about the clutch cam disk axis (30), has different slopes away from and/or toward the clutch cam disk axis (30).

5. Device according to Claim 4, wherein, starting from the neutral position, a high slope is initially provided, whereas a flat slope is provided adjacent thereto.

6. Device according to one of Claims 3, 4 or 5, wherein the degressive configuration of the at least one curved path (71, 72) is designed on the basis of a mathematical function which is constant in the mathematical sense, or so as to have two or more slopes which are different, but each of which is constant.

7. Device according to one of the preceding claims, wherein the clutch cam disk (03) is disposed on the selector shaft (02) so as to be rotatable through the angle-of-rotation range (2).

8. Device according to one of the preceding claims, wherein two scissor levers (05, 51, 52) are provided.

9. Device according to Claim 8, wherein the ends (06) of the two scissor levers (05, 51, 52) are each guided in a separate curved path (71, 72), diametrically opposite one another with respect to the clutch cam disk axis (30).

10. Device according to Claim 8 or 9, wherein the curved paths (71, 72) for the two scissor levers (05, 51, 52) are provided on opposite end faces of the clutch cam disk (03) .

11. Device according to Claim 8, 9 or 10, wherein the curved paths (71, 72) are designed with point symmetry with respect to the clutch cam disk axis (30).

12. Device according to Claim 8, 9 or 10, wherein the curved paths (71, 72) are designed in such a way that, starting from a neutral position of the clutch cam disk (03), in which both scissor levers (05, 51, 52) assume a starting position, upon rotation in a first direction of rotation, a first scissor lever (05, 51) experiences an increasing deflection away from the clutch cam disk axis (30) or toward the clutch cam disk axis (30) as the angle of rotation increases, whereas a second scissor lever (05, 52) maintains its starting position and, upon rotation in a second direction of rotation, which is opposite the first direction of rotation, the second scissor lever (05, 52) experiences an increasing deflection away from the clutch cam disk axis (30) or toward the clutch cam disk axis (30) as the angle of rotation increases, whereas the first scissor lever (05, 51) maintains its starting postion.

13. Device according to one of the preceding claims, wherein the at least one curved path (71, 72) is designed in such a way that, starting from a neutral position, when the clutch cam disk (03) is rotated in a first direction of rotation, a scissor lever (05, 51, 52) guided via its end (06) in the curved path (71, 72) experiences an increasing deflection away from the clutch cam disk axis (30) as the angle of rotation increases and, in a second direction of rotation opposite the first direction of rotation, experiences a decreasing deflection toward the clutch cam disk axis (30).

14. Clutch-controlled transfer case having a two-stage intermediate gearing, comprising:
- a drive shaft,
- a primary shaft, which is permanently coupled to the drive shaft,
- a secondary shaft,
- a friction clutch, which is disposed between the drive shaft and the secondary shaft, couples these to the drive shaft as necessary for its operation and decouples these from the drive shaft as necessary for its disengagement, the friction clutch having at least one friction pair consisting of a first friction disk, which is non-rotatably connected to a driven shaft, and a second friction disk, which is non-rotatably connected to a shaft to be driven,
- an actuating mechanism (04) which, when actuated, exerts an axial force on the one friction pair or the multiple friction pairs of the friction clutch, which axial force causes the friction clutch to be pressed together,
- a two-stage intermediate gearing having a first and a second shifting stage,
and also a device (01) according to one of Claims 1 to 13, wherein the actuating mechanism (04) is coupled to the at least one scissor lever (05, 51, 52) and is actuated by means of a deflection of the end (06) of the at least one scissor lever (05, 51, 52).

15. Transfer case according to Claim 14, wherein
- the primary shaft is fixedly connected to the drive shaft or is integral therewith, and/or
- the secondary shaft is disposed with axial offset with respect to the drive shaft, and a transfer case bridging the axial offset is disposed between the secondary shaft and the drive shaft, and/or
- the actuating mechanism (04) comprises two ramp rings (09), which can be rotated with respect to one another and which both can be rotated with respect to one another, or one is designed so as to be stationary and the other is designed so as to be rotatable with respect to the stationary ramp ring, wherein at least one ramp ring (09) is connected to a scissor lever (05, 51, 52) or is integral therewith.

## Revendications

1. Dispositif (01) pour commander une boîte de transfert à accouplement commandé pourvue d'une transmission intermédiaire à deux étages, comprenant :
- un arbre de commutation (02) entraîné en rotation,
- un entraînement pour faire tourner l'arbre de commutation (02),
- un disque de came d'accouplement (03) qui peut tourner par le biais de l'arbre de commutation (02) autour d'un axe de disque de came d'accouplement (30), et
- au moins un levier croisé (05, 51, 52),
dans lequel :
- une extrémité (06) d'au moins un levier croisé (05, 51, 52) est guidée dans une coulisse (07) prévue au niveau du disque de came d'accouplement (03),
- la coulisse (07) présente, pour chaque levier croisé (05, 51, 52), à chaque fois une trajectoire courbe (71, 72) dans laquelle est guidée l'extrémité (06) du levier croisé (05, 51, 52) associé à la trajectoire courbe (71, 72) et
- la trajectoire courbe (71, 72) présente au moins une portion en spirale (70) avec une distance augmentant ou diminuant de manière constante par rapport à l'axe de disque de came d'accouplement (30), le long de laquelle portion (70), une extrémité (06) d'un levier croisé (05, 51, 52) guidée dans celle-ci, dans le cas d'une rotation du disque de came d'accouplement (03) avec un angle de rotation croissant, subit une variation, augmentant ou diminuant de manière constante, de sa déviation par rapport à l'axe de disque de came d'accouplement (30),
**caractérisé en ce que**
- la trajectoire courbe (71, 72) s'enroule sur au moins 360° autour de l'axe de disque de came d'accouplement (30), et
- le disque de came d'accouplement (03) est disposé de manière à pouvoir tourner autour d'une plage d'angles de rotation (2) par rapport à l'arbre de commutation (02) entre deux butées (31, 32) de telle sorte que par rotation de l'arbre de commutation (02) à l'intérieur de la plage d'angles de rotation (2) située entre ces butées (31, 32), une commutation puisse être effectuée en va-et-vient entre les étages de commutation de la transmission intermédiaire et que, par rotation de l'arbre de commutation (02) au-delà de la plage d'angles de rotation (2), l'extrémité de l'au moins un levier croisé (05, 51, 52) subisse une déviation pour actionner l'accouplement en conservant un étage de commutation sélectionné.

2. Dispositif selon la revendication 1, dans lequel l'au moins un levier croisé (05, 51, 52) est pourvu au niveau de son extrémité (06) guidée dans la coulisse (07), d'au moins un rouleau (08) supporté de manière rotative, roulant dans la coulisse (07).

3. Dispositif selon la revendication 1 ou 2, dans lequel l'au moins une trajectoire courbe (71, 72) présente une configuration dégressive en rapport avec la déviation croissante, provoquée par celle-ci avec un angle de rotation croissant, de l'au moins un levier croisé (05, 51, 52), guidé avec son extrémité (06) dans celle-ci.

4. Dispositif selon la revendication 3, dans lequel la configuration dégressive est réalisée de telle sorte que la trajectoire courbe (71, 72) présente, le long de son étendue autour de l'axe de disque de came d'accouplement (30) des pentes différentes à l'écart et/ou vers l'axe de disque de came d'accouplement (30).

5. Dispositif selon la revendication 4, dans lequel, à partir de la position neutre, on prévoit d'abord une pente forte, tandis qu'une pente plate est prévue à la suite de celle-ci.

6. Dispositif selon l'une quelconque des revendications 3, 4 ou 5, dans lequel la configuration dégressive de l'au moins une trajectoire courbe (71, 72) est réalisée sur la base d'une fonction mathématique constante au sens mathématique, ou avec deux ou plus de deux pentes différentes mais à chaque fois constantes en soi.

7. Dispositif selon l'une quelconque des revendications précédentes, dans lequel le disque de came d'accouplement (03) est disposé sur l'arbre de commutation (02) de manière à pouvoir tourner autour de la plage d'angles de rotation (2) .

8. Dispositif selon l'une quelconque des revendications précédentes, dans lequel deux leviers croisés (05, 51, 52) sont prévus.

9. Dispositif selon la revendication 8, dans lequel les extrémités (06) des deux leviers croisés (05, 51, 52), sont guidées de manière diamétralement opposée l'une à l'autre par rapport à l'axe de disque de came d'accouplement (30) à chaque fois dans une trajectoire courbe propre (71, 72).

10. Dispositif selon la revendication 8 ou 9, dans lequel les trajectoires courbes (71, 72) pour les deux leviers croisés (05, 51, 52) sont prévues sur des côtés frontaux opposés du disque de came d'accouplement (03).

11. Dispositif selon la revendication 8, 9 ou 10, dans lequel les trajectoires courbes (71, 72) sont réalisées avec une symétrie ponctuelle par rapport à l'axe de disque de came d'accouplement (30).

12. Dispositif selon la revendication 8, 9 ou 10, dans lequel les trajectoires courbes (71, 72) sont réalisées de telle sorte qu'à partir d'une position neutre du disque de came d'accouplement (03), dans laquelle les deux leviers croisés (05, 51, 52) adoptent une position de départ, pour une rotation dans un premier sens de rotation, un premier levier croisé (05, 51) subisse, avec un angle de rotation croissant, une déviation croissante à l'écart de l'axe de disque de came d'accouplement (30) ou vers l'axe de disque de came d'accouplement (30), tandis qu'un deuxième levier croisé (05, 52) conserve sa position de départ, et pour une rotation dans un deuxième sens de rotation opposé au premier sens de rotation, le deuxième levier croisé (05, 52) subisse, avec un angle de rotation croissant, une déviation croissante à l'écart de l'axe de disque de came d'accouplement (30) ou vers l'axe de disque de came d'accouplement (30), tandis que le premier levier croisé (05, 51) conserve sa position de départ.

13. Dispositif selon l'une quelconque des revendications précédentes, dans lequel l'au moins une trajectoire courbe (71, 72) est réalisée de telle sorte qu'à partir d'une position neutre, un levier croisé (05, 51, 52) guidé avec son extrémité (06) dans la trajectoire courbe (71, 72), pour une rotation du disque de came d'accouplement (03) dans un premier sens de rotation, subisse, avec un angle de rotation croissant, une déviation croissante à l'écart de l'axe de disque de came d'accouplement (30), et dans un deuxième sens de rotation opposé au premier sens de rotation, une déviation décroissante vers le l'axe de disque de came d'accouplement (30).

14. Boîte de transfert à accouplement commandé pourvue d'une transmission intermédiaire à deux étages, comprenant :
- un arbre d'entraînement,
- un arbre primaire accouplé de manière permanente à l'arbre d'entraînement,
- un arbre secondaire,
- un accouplement à friction disposé entre l'arbre d'entraînement et l'arbre secondaire, accouplant celui-ci au besoin à l'arbre d'entraînement en vue de son entraînement, et le désaccouplant au besoin de l'arbre d'entraînement en vue de son immobilisation, avec au moins un couple de friction constitué d'un premier disque de friction connecté de manière non rotative à un arbre entraîné et d'un deuxième disque de friction connecté de manière non rotative à un arbre à entraîner,
- un mécanisme d'actionnement (04) qui, lors de son actionnement, exerce une force axiale provoquant une compression de l'accouplement à friction sur ledit ou lesdits couples de friction de l'accouplement à friction,
- une transmission intermédiaire à deux étages avec un premier et un deuxième étage de commutation,
ainsi qu'un dispositif (01) selon l'une quelconque des revendications 1 à 13, le mécanisme d'actionnement (04) étant accouplé à l'au moins un levier croisé (05, 51, 52) et étant actionné par une déviation de l'extrémité (06) de l'au moins un levier croisé (05, 51, 52).

15. Boîte de distribution selon la revendication 14, dans laquelle
- l'arbre primaire est connecté fixement à l'arbre d'entraînement ou est réalisé d'une seule pièce avec celui-ci, et/ou
- l'arbre secondaire est disposé avec un décalage axial par rapport à l'arbre d'entraînement, et un renvoi d'angle surmontant le décalage axial est disposé entre l'arbre secondaire et l'arbre d'entraînement, et/ou
- le mécanisme d'actionnement (04) comprend deux anneaux en rampe (09) pouvant tourner l'un par rapport à l'autre, qui peuvent tous les deux tourner l'un par rapport à l'autre, ou dont l'un est réalisé sous forme fixe et l'autre peut tourner par rapport à celui réalisé sous forme fixe, au moins un anneau en rampe (09) étant connecté à un levier croisé (05, 51, 52) ou étant réalisé d'une seule pièce avec celui-ci.
